# EUROPÄISCHE PATENTANMELDUNG

(11) **EP 2 639 134 A2**
(43) Veröffentlichungstag der Anmeldung: **18.09.2013**
(21) Anmeldenummer: 13158809.7
(22) Anmeldetag: 12.03.2013
(51) Int. Cl.: B62B 9/26

(54) **Behälter zum Aufnehmen und Transportieren von länglichen Gegenständen**

(30) Priorität: 12.03.2012 DE 102012203838; 18.04.2012 DE 202012003974 U
(71) Anmelder: Bollman, Grace, 81243 München (DE)
(72) Erfinder: Bollman, Grace, 81243 München (DE)
(74) Vertreter: Vossius & Partner

(57) **Zusammenfassung**

Die vorliegende Erfindung betrifft einen Behälter (10), der im Wesentlichen die Form einer Spitztüte aufweist, mit einem Behältermantel (12) mit einer Innenfläche (14) und einer Außenfläche (16), einer ersten Behälteröffnung (18) an einem Ende des Behältermantels (12) und mit einem oder mehreren Befestigungselementen (22) zum Anbringen des Behälters (10), insbesondere an einem Kinderwagen (500), die im Bereich der Außenfläche (16) des Behälters (10) angeordnet sind, zum Aufnehmen und Transportieren von länglichen Gegenständen (600, 602, 604, 606) sowie ein System (1000) mit einem solchen Behälter (10) und einem Kinderwagen (500).

## Beschreibung

Die vorliegende Erfindung betrifft einen Behälter zum Aufnehmen und Transportieren von Gegenständen, insbesondere von länglichen Gegenständen. Insbesondere betrifft die Erfindung einen solchen Behälter, der an einen Kinderwagen angebracht werden kann.

### Stand der Technik

Zum Transport von Babys und Kleinkindern werden heutzutage standardmäßig Kinderwagen eingesetzt. Es gibt verschiedene Arten von Kinderwagentypen. So ist der klassische Kinderwagen für den liegenden Transport von Säuglingen und Kleinkindern gedacht und umfasst einen Transportteil, bspw. einen Korb beziehungsweise eine abnehmbare Tragetasche, und einen Rahmen bzw. Fahrgestell. Alternativ oder zusätzlich weisen Kinderwagen, insbesondere Sportkinderwagen oder Buggys gewöhnlich eine Fußstütze auf und sind, alternative oder zusätzlich, für den sitzenden Transport von Kleinkindern ausgelegt. Alle Kinderwagen weisen Räder auf, wobei die meisten Kinderwagenmodelle drei oder vier Räder aufweisen. Diese Räder sind über verschiedene Elemente, die bspw. einen Rahmen bilden, mit dem Transportteil des Kinderwagens verbunden. Für gewöhnlich wiesen diese Elemente verschiedene Stangen auf, von denen üblicherweise zumindest einige mit der (im Gebrauch auf ebenem Grund) Waagerechten einen Winkel zwischen 0° und ca. 80° einschließen.

Oftmals sind an solchen Kindewagen Elemente angebracht, die dazu ausgelegt sind, Gegenstände zu transportieren. So verfügen Kinderwagen oftmals über Netze und/oder Ablageflächen, mit denen Gegenstände transportiert werden können. Derartige Netze und/oder Ablageflächen sind jedoch nur für den Transport bestimmter Gegenstände geeignet und sind daher im praktischen Nutzen oftmals nur beschränkt einsetzbar. Insbesondere große, unhandliche und/oder längliche Gegenstände können mit derartigen Vorrichtungen nur schwer transportiert werden. So sind die derartigen Systeme nicht besonders geeignet dafür, Gegenstände wie längliche Baguettes, Blumen, Rollen (z.B. von Geschenkpapier), Stöcke, Schirme, Sportgeräte bspw. Hockeyschläger, und/oder große Bälle (z.B. Fußbälle) zu transportieren. Im praktischen Gebrauch werden solche Gegenständer daher oft quer zur Fahrtrichtung des Kinderwagens über den Lenker bzw. Handgriffe gelegt. Dies ist jedoch hinderlich, wenn die Länge der zu transportierenden Gegenstände die Breite des Kinderwagens übersteigt. Andererseits sind die Gegenstände so gelagert oftmals nicht gut befestigt und lösen sich während des Gebrauchs. Oftmals werden daher solche Gegenstände in zusätzlichen, bekannten Taschen, wie bspw. Rucksäcken, verstaut und separat getragen bzw. transportiert.

Es ist daher eine Aufgabe der vorliegenden Erfindung, die mit dem Stand der Technik verbundenen Probleme zu lösen. Es ist insbesondere eine Aufgabe der vorliegenden Erfindung, eine verbesserte Möglichkeit für das Transportieren von, insbesondere unhandlichen, vor allem länglichen, Gegenständen an Geräten wie Kinderwagen bereitzustellen. Die Lösung soll dabei vorteilhafter Weise gut zu handhaben sein. Auch eine funktionale und optische Kompatibilität ist vorteilhafter Weise zu gewährleisten. Hierbei insbesondere auch ein sicherer, bequemer und platzsparender Transport gewährleistet werden. Zudem ist, insbesondere angesichts der steigenden Anforderungen an die optische Gestaltung von Kinderwagen, auch die optische Ansprechbarkeit zu verbessern. Hierbei ist schließlich vorzugsweise auch ein variabler Einsatz zu gewährleisten.

### Zusammenfassung der Erfindung

Dieses Problem wird von dem patentgemäßen Behälter und einem System mit einem Kinderwagen und dem patentgemäßen Behälter gelöst. Der Behälter weist vorzugsweise im Wesentlichen die Form einer Spitztüte auf. In anderen Worten kann der Behälter als Kegelstumpf oder Konus ausgebildet sein. Insbesondere kann der Behälter einen zumindest im Wesentlichen runden und bevorzugt einen runden Querschnitt aufweisen bzw. annehmen. Ferner weist der Behälter einen Behältermantel auf, der seinerseits vorzugsweise gewebtes Material aufweist, besonders bevorzugt Stoff und/oder einen gewebten Kunststoff, der ganz besonders bevorzugt wasserabweisende Fasern wie z.B. Polyester und/oder Nylon aufweist. Vorzugsweise ist der Behälter daher nicht formstabil, sondern kann von einem Benutzer gefaltet und/oder aufgebläht werden. Weiter kann der Behälter auch nicht gewebtes Material, vor allem Kunststoff, wie zum Beispiel Planenmaterial aufweisen. Daher kann der Behälter sowohl die Form eines Kegelstumpfes aufweisen, als auch, bspw. im gefalteten Zustand, die Form eines Dreiecks und/oder die Form eines, vorzugsweise im Wesentlichen gleichschenkligen, Trapezes.

Ferner weist der Behälter einen Behältermantel mit einer Innenfläche und einer Außenfläche auf, sowie mindestens eine erste Behälteröffnung an einem Ende des Behältermantels, insbesondere an einem Längsende des Behältemiantels, und außerdem bevorzugt ein oder mehrere Befestigungselemente zur Anbringung des Behälters an einen Kinderwagen. Diese können am Behältermantel vorgesehen sein. Bevorzugt erstreckt sich die erste Behälteröffnung im quer zu einer Längsrichtung bzw. -achse des Behälters. Weiter ist es bevorzugt, dass diese erste Behälteröffnung an dem Längsende der Spitztüte bzw. des Kegels oder Kegelstumpfes angeordnet ist, welches einen größeren Umfang bzw. Durchmesser aufweist als das entgegengesetzte Längsende. Vorzugsweise ist der Behälter derart ausgestaltet, dass die erste Behälteröffnung zu einem einen Kinderwagen schiebenden Benutzer weist, wenn der Behälter an einem Kinderwagen angebracht ist. Die mindestens eine Befestigungselement ist vorteilhaft im Bereich der Außenfläche des Behälters angeordnet. Bevorzugt sind zwei voneinander beabstandete Befestigungselemente vorgesehen. Der Behälter ist geeignet zum Aufnehmen und Transportieren von insbesondere länglichen Gegenständen und besonders bevorzugt auch für den Transport von langen Gegenständen. Vorzugsweise ist der Behälter ebenso besonders geeignet für den Transport von zerbrechlichen, sperrigen, unhandlichen, beschmutzten und/oder nassen Gegenständen, zum Beispiel: Sportgeräte, vor allem Hockeyschläger, Billardqueues, (Mini-)Golfschläger, Schläger (z.B. für Tennis, Squash, Badminton), Stöcke für Nordic-Walking, so genannte "Schwimmnudeln", Schirme, Bälle, (Stangen-)Brote, Blumen, etc. Vorzugsweise kann der Behälter mehrere Gegenstände gleichzeitig transportieren. Hierdurch wird ein Behälter bereitgestellt, in dem sich längliche und unhandliche Gegenstände praktikabel und einfach an Kinderwagen transportieren lassen. Im Vergleich zum Stand der Technik ermöglicht dies eine sichere und einfache Mitführung von Gegenständen wie z.B. Hockeyschlägern, Regenschirmen und/oder Anderes. Diese können nun einfach mitgeführt werden, ohne dass die Gefahr besteht, diese zu verlieren oder die Nutzung des Kinderwagens einzuschränken oder gar Passanten oder das zu transportierende Kind zu gefährden. Vorzugsweise kann der Behälter derart an einem Kinderwagen angebracht werden, dass ein Kind bzw. ein Baby, welches sich im Kinderwagen befindet, nicht in Kontakt mit den transportierten Gegenständen kommt bzw. diese nicht erreichen kann.

Vorzugsweise kann der Behälter im Wesentlichen die Form eines Hohlkegels beziehungsweise eines hohlen Kegelstumpfes annehmen. In einem solchen Fall wird das maximal mögliche Volumen in einem Inneren des Behälters eingeschlossen. In anderen Worten ist dies also der Zustand, in dem der Behälter maximal "aufgebläht" vorliegt. Ein solcher Konus beziehungsweise Kegelstumpf verfügt über eine Längsrichtung und über eine in Längsrichtung verlaufende Achse, vorzugsweise eine Symmetrieachse. Auf einem vorzugsweise (rotations-)symmetrischen hohlen Kegel beziehungsweise Kegelstumpf kann jeder Punkt eindeutig bestimmt werden durch die Zuordnung eines Umfangwinkels in Umfangrichtung und einer Entfernungsangabe von der Kegelspitze, die, im Falle eines Kegels tatsächlich vorhanden ist oder, im Falle eines Kegelstumpfes, leicht konstruiert werden kann. Verbindet man auf einem solchen Kegel beziehungsweise Kegelstumpf zwei Punkte miteinander, die den gleichen Umfangswinkel aufweisen, so verläuft die Verbindungslinie zwischen ihnen, ohne sich in Umfangsrichtung zu ändern. Vorzugsweise definiert jede solche Verbindungslinie, im Sinne des Patentes, eine Längsachse des Behälters. Vorzugsweise werden alle Achsen als Längsachsen angesehen, die sich entlang der Längs- bzw. Längenausrichtung des Behälters erstrecken. Vorzugsweise ist der größte Durchmesser des Behälters kleiner, vorzugsweise wesentlich kleiner, als die Länge des Behälters (d.h. von der ersten Öffnung bis zum gegenüberliegenden Ende, vorzugsweise der zweiten Öffnung). Obwohl die Beschreibung anhand von Kegeln und Kegelstümpfen einfacher ist, ist dem Fachmann auch klar, dass diese Längsachsen ebenso vorhanden sind, wenn der Behälter so zusammengefaltet ist, dass Bereiche der Innenfläche andere Bereiche der Innenfläche des Behältermantels berühren oder fast berühren.

Vorzugsweise weist der Behälter in einer Draufsicht senkrecht zu einer solchen Längsachse eine Winkelausdehnung von nicht mehr als etwa 60°, besonders bevorzugt zwischen etwa 20° und 55°, ganz besonders bevorzugt zwischen etwa 20° und 50° und am stärksten bevorzugt zwischen etwa 35° und 50° sowie 35° bis 47° auf. Auch etwa 40° bis 50° sind möglich. Diese Winkelausdehnung kann in einer Draufsicht sowohl dann vorliegen, wenn der Behälter die Form eines Kegelstumpfes beziehungsweise eines Kegels aufweist als auch dann, wenn der Behälter gemäß obigen Ausführungen zusammengefaltet ist. Durch eine solche Winkelausdehnung können insbesondere längliche Gegenstände einfach und sicher in dem Behälter verstaut werden.

Ebenso ist es bevorzugt, den Behälter an anderen Mobilitätsgeräten, z.B. Rollstühlen und/oder Rollatoren bzw. Stangen hiervon anzubringen bzw. daran anbringbar zu gestalten.

Weiterhin ist es bevorzugt, dass die Befestigungselemente ausgelegt sind, den Behälter an mindestens einer Stange eines Kinderwagens anzubringen und vorzugsweise zu befestigen. Diese Befestigung kann besonders bevorzugt lösbar sein. Hierdurch wird nicht nur eine praktische Verstauung von unhandliche und insbesondere länglichen Gegenständen in dem Behälter gewährleistet, sondern dieser Behälter kann auch in praktischer und einfacher Art und Weise an einen Kinderwagen angebracht beziehungsweise befestigt werden. Vorzugsweise ist der Behälter an einem Mobilitätsgerät, insbesondere einem Kinderwagen, an einer sich im Wesentlichen längs zur Fahrtrichtung erstreckenden Stange anbringbar. Stange umfasst hier vorzugsweise eine durchgehende Stange, aber auch mehrere, direkt oder indirekt verbundene Stangen oder Rahmenelemente.

Ebenso ist es bevorzugt, dass der Behälter ausgelegt ist, an verschiedenen Kinderwagenmodellen angebracht zu werden. Dies kann dadurch gewährleistet werden, dass die Befestigungselemente den Kinderwagen an verschiedenen Modellen von Kinderwagen bzw. an verschieden ausgebildeten Stangen bzw. Stangenelementen befestigen können. Hierdurch kann ein Behälter mit verschiedenen Kinderwagenmodellen oder allgemeiner mit verschiedenen Mobilitätsgeräten und Modellen hiervon verwendet werden.

Alternativ kann es aber auch bevorzugt sein, den Behälter derart zu gestalten, dass er nur mit einer Auswahl von Modellen und insbesondere mit nur einem Modell von einem Mobilitätsgerät, bevorzugt einem Kinderwagen, verwendet werden kann.

Ebenso ist es bevorzugt, dass die Befestigungselemente ausgelegt sind, den Behälter an einer Stange eines Kinderwagens anzubringen, die im gewöhnlichen Gebrauch zur Waagerechten einen Winkel zwischen 20° und 70°, vorzugsweise zwischen 30° und 60°, besonders bevorzugt zwischen 35° und 55° und ganz besonders bevorzugt zwischen 40° und 50° bildet. Gerade im Vergleich zu Stangen, die eine nahezu waagerechte oder nahezu senkrechte Anordnung haben, müssen Befestigungselemente, die ausgelegt sind, einen Behälter an einer Stange eines Kinderwagens zu befestigen, die im Bereich der Winkelhalbierenden zwischen Waagerechter und Senkrechter angeordnet ist, ausgelegt sein, den Behälter sowohl entlang der Stange zu befestigen, als auch einer Kraft (insbesondere eine Komponente der Schwerkraft) senkrecht zu dieser Stange zu widerstehen. Befestigungselemente, die hingegen lediglich dazu ausgelegt sind, etwas an einer Stange zu befestigen, die senkrecht beziehungsweise waagerecht steht, müssen hingegen nicht dafür ausgelegt sein, einer Kraft in Transversalrichtung zur Stange beziehungsweise entlang der Stange widerstehen zu können.

Vorzugsweise weist der Behälter mindestens zwei und besonders bevorzugt genau zwei oder drei Befestigungselemente zur Anbringung des Behälters an einen Kinderwagen auf. Diese sind vorzugsweise im Wesentlichen am gleichen Umfangswinkel des Behältermantels angeordnet. Ebenso ist es bevorzugt, dass zwei der Befestigungselemente in Bereichen entgegen gesetzter Enden des Behältermantels in Längsrichtung angeordnet sind. Im Falle von drei Befestigungselementen kann es ferner bevorzugt sein, dass der Abstand zwischen zwei benachbarten Befestigungselementen im Wesentlichen gleich ist. Das Vorsehen von mindestens zwei und vorzugsweise genau zwei oder drei Befestigungselementen kann zu einer geeigneten Befestigung des Behälters an einen Kinderwagen beitragen. Gleichzeitig bleibt die Zahl der Befestigungselemente, vor allem wenn zwei oder drei Befestigungselemente vorgesehen werden, begrenzt, was eine einfache Handhabung des Behälters gewährleistet.

Es ist ferner bevorzugt, dass die Befestigungselemente ausgelegt sind, die Stange des Kinderwagens in einer Umfangsrichtung der Stange zumindest teilweise zu umschließen und besonders bevorzugt vollständig zu umschließen und hierdurch die Befestigung des Behälters realisiert wird. Wie vorstehend erwähnt ist es ein Ziel der vorliegenden Erfindung, eine einfache, sichere und praktikable Transportmöglichkeit für längliche Gegenstände an Kinderwagen bereitzustellen. Durch eine geeignete Wahl der Befestigungselemente kann der Behälter in einfacher, praktikabler und sicherer Art und Weise an den Kinderwagen beziehungsweise eine Stange davon angebracht werden. Eine Ausführungsform der Befestigungselemente sieht vor, die Befestigungselemente so zu gestalten, dass sie jeweils zwei Abschnitte aufweisen, die miteinander in Eingriff gebracht werden können. Unter Eingriff ist in diesem Zusammenhang jede Verbindung zu sehen, die einer Kraft widerstehen kann. Dies kann bevorzugt durch Vorsehen eines Klettverschlusses, durch Knopfvorrichtungen, vorzugsweise Druckknopfvorrichtungen, aber auch durch Schnüre, Clips, insbesondere C-Clips aus Kunststoff und/oder Klebemittel geschehen. Ebenso ist das Vorsehen von selbstschließenden Klemmen und/oder Bändern aber auch Haken, bspw. Karabinerhaken, möglich. Besonders bevorzugt ist, dass einer der beiden Abschnitte Klettverschlussschlaufen und der andere der beiden Abschnitte Klettverschlusswiderhaken aufweisen und diese so angeordnet sind, dass sie miteinander in Eingriff stehen können, wenn die zwei Abschnitte die Stange zumindest teilweise umschließen. Durch das Vorsehen solch einer Klettverschlussvorrichtung kann der Benutzer die Abschnitte der Befestigungselemente in einfacher und praktikabler Art und Weise miteinander in Eingriff bringen und wieder lösen. Die ermöglicht dem Benutzer, den Behälter, wenn gewünscht, an einem Kinderwagen zu befestigen und den Behälter, wenn seine Anbringung an einem Kinderwagen nicht mehr erwünscht ist, wieder von der Stange des Kinderwagens zu entfernen. Gleichzeitig gewährt es einen sicheren Halt des Behälters an einer Stange des Kinderwagens.

Gemäß einer weiteren bevorzugten Ausführungsform ist zusätzlich eine Verstärkungsstange vorgesehen, die so angeordnet ist, dass sie, wenn der Behälter an einem Kinderwagen, bspw. an einer Stange des Kinderwagens, angebracht ist, eine gerichtete Stabilisierung erfährt, bspw. im Wesentlichen zu dieser Stange parallel ist, und die sich zumindest über einen Großteil einer Längsrichtung des Behältermantels erstreckt. Besonders bevorzugt ist diese Verstärkungsstange an einer Innenfläche oder im Inneren des Behälters angeordnet. Weiterhin ist es besonders bevorzugt, dass diese Verstärkungsstange entlang einer Längsrichtung des Behälters verläuft. Eine derartige Verstärkungsstange kann zur Formstabilität und Stabilität des Behälters im Allgemeinen beitragen. Ferner kann sie eine vereinfachte Ausrichtung, bspw. parallel zu einer Stange eines Kinderwagens, erleichtern. Vorzugsweise weist eine solche Stange Holz, Metall und/oder Kunststoff auf. Alternativ oder zusätzlich ist es möglich, den Behälter, insbesondere die Befestigungsmittel derart auszubilden, dass der Behälter unter Zugspannung bzw. eine Zugspannung aufnehmbar an einem Kinderwagen befestigbar ist. Dies kann bevorzugt im Zusammenspiel mit am Kinderwagen vorgesehenen (zusätzlichen oder Konstruktionsinhärenten) Befestigungspunkten und/oder durch entsprechende Ausbildung der Befestigungselemente erreicht werden.

Wenn eine solche Verstärkungsstange vorgesehen ist, ist es besonders bevorzugt, dass die Befestigungselemente in Bereichen an der Außenfläche des Behälters angeordnet sind, an deren korrespondierenden Innenfläche die Verstärkungsstange angeordnet ist. Dies kann zum Beispiel dazu führen, dass die Verstärkungsstange im Gebrauch parallel zu einer Stange des Kinderwagens ausgerichtet ist, oder aber, bspw. bei Fehlen einer solchen Kinderwagenstange, die notwendige Stabilität des Behälters bereitstellt. Hierdurch wird eine vereinfachte Anbringung und Handhabung des Behälters gewährleistet.

Weiterhin ist es bevorzugt, in der ersten Behälteröffnung zusätzlich eine Schlaufe anzubringen, durch die längliche Gegenstände fixiert werden können. Bei dieser Schlaufe kann es sich zum Beispiel um ein elastisches Material handeln, welches zum Beispiel auch in Zugbünden von Hosen, Jacken und/oder Rucksäcken eingesetzt wird. Hierdurch können längliche Gegenstände zusätzlich fixiert werden, was deren Transport weiter erleichtert und deren Transportsicherheit weiter erhöht. Vorzugsweise ist ein Umfang der Schlaufe kleiner als ein Umfang der Behälteröffnung und zwar so, dass das Verhältnis zwischen dem Umfang der ersten Behälteröffnung und dem Umfang der Schlaufe zwischen 1 und 6, bevorzugt zwischen 1.5 und 5, besonders bevorzugt zwischen 2 und 4 und ganz besonders bevorzugt zwischen 2.5 und 3.5 liegt. Hierdurch wird der Raum, in dem längliche Gegenstände in dem Behälter ausgerichtet sein können, wenn sie durch die Schlaufe befestigt sind, die vorzugsweise elastisch ist, weiter eingeschränkt. Ferner ist es bevorzugt, dass die Schlaufe ein Einstellelement zur Längen- bzw. Umfangsverstellung aufweist. Hierdurch kann ein Umfang der Schlaufe verändert und längliche Gegenstände können mittels eines solchen Einstellelements passend fixiert werden. Ganz besonders bevorzugt ist das Einstellelement ausgelegt, zwei Punkte beziehungsweise Bereiche der Schlaufe zu fixieren, sodass zwei Unterschlaufen gebildet werden, die durch die Punkte beziehungsweise Berieche begrenzt sind. Hierdurch lassen sich die Größen der beiden Unterschlaufen passend wählen, um längliche Gegenstände, z.B. Hockeyschläger und Schirme, optimal zu fixieren. Ein solches Einstellelement trägt weiter zum Benutzerkomfort und zur Sicherheit bei. Dies erlaubt auch, mehrere Gegenstände aufzunehmen bzw. zu befestigen.

Zusätzlich ist es bevorzugt, dass eine zweite Behälteröffnung an einem Ende des Behältermantels vorgesehen ist, die dem Ende der ersten Behälteröffnung entgegengesetzt ist. Wenn eine solche zweite Behälteröffnung nicht vorgesehen ist, kann der Behälter die Form eines Kegels aufweisen. Ist eine solche Behälteröffnung vorgesehen, kann der Behälter die Form eines Kegelstumpfes aufweisen. Es ist jedoch nicht erforderlich, dass eine oder beide der Behälteröffnungen zwingend lediglich in Umfangsrichtung bzw. quer zur Längsachse verlaufen, auch wenn es bevorzugt ist, dass diese Öffnungen zumindest im Wesentlichen in Umfangsrichtung bzw. quer zur Längsachse verlaufen. Ebenso kann es aber auch bevorzugt sein, dass die Behälteröffnungen "angeschrägt" sind, d.h. in Bezug auf obenbeschriebene Koordinaten eine unterschiedliche Entfernung zu einer tatsächlich vorhandenen oder konstruierbaren Kegelspitze aufweisen. Eine solche zweite Behälteröffnung kann beispielsweise hinsichtlich ihrer Dimensionen und Ausgestaltung derart ausgelegt sein, um Flüssigkeiten, Dreck und/oder Sand abzuleiten und/oder um lange Gegenstände hindurchzuführen. Gerade bei wasserabweisenden bzw. wasserdichten Materialien kann es von Vorteil sein, eine solche Behälteröffnung so auszugestalten, dass sie Flüssigkeiten abzuleiten vermag, um zu verhindern, dass sich beim Gebrauch des Behälters Flüssigkeiten in diesem ansammeln. Dies könnte zum Beispiel bei Verwendung im Regen passieren oder aber, wenn ein Regenschirm mit Restnässe oder auch ein anderer Gegenstand, an dem sich Flüssigkeit befindet, in den Behälter eingeführt werden. Ferner ist es bevorzugt, die Behälteröffnung so auszugestalten, dass lange Gegenstände hier durchgeführt werden können. Die zweite Behälteröffnung, bzw. ihr Durchmesser, ist vorzugsweise kleiner, besonders bevorzugt wesentlich kleiner als die erste Behälteröffnung, bzw. ihr Durchmesser. Die zweite Behälteröffnung weist vorzugsweise einen Umfang zwischen 4 cm und 12 cm, besonders bevorzugt zwischen 5 cm und 10 cm und ganz besonders bevorzugt zwischen 6 cm und 8 cm auf. Vorzugsweise liegt das Verhältnis zwischen dem Umfang der ersten und dem Umfang der zweiten Behälteröffnung zwischen 2 und 30, besonders bevorzugt zwischen 6 und 20, ganz besonders bevorzugt zwischen 10 und 15 und ganz besonders bevorzugt zwischen 12 und 14.

Ferner ist es bevorzugt, einen zusätzlichen Kragenabschnitt am Behälter vorzusehen. Dieser kann ein- bzw. um- und ausklappbar sein. Im eingeklappten Zustand kann der Kragenabschnitt umfangsseitig von dem Behältermantel umgeben sein. Es kann aber auch bevorzugt sein, dass der Kragenabschnitt einen Bereich des Behältermantels im eingeklappten Zustand umfangsseitig umgibt. Im ausgeklappten Zustand verjüngt sich der Kragenabschnitt vorzugsweise mit zunehmendem Abstand vom Behältermantel. Insbesondere heißt das, dass der Kragenabschnitt nahe des Mantelabschnitts einen größeren Umfang auf als weiter davon entfernt. Ein solcher Kragenabschnitt ist vorzugsweise im Bereich der ersten Behälteröffnung des Behälters angebracht.

In einem gefalteten Zustand des Behälters, in welchem Bereiche der Innenfläche des Behälters andere Bereiche der Innenfläche des Behälters berühren bzw. fast berühren, weist der Behälter in einer Draufsicht senkrecht zu einer Längsrichtung des Behälters die Form eines spitzen Dreiecks oder im Wesentlichen die Form eines, vorzugsweise gleichmäßigen, Trapezes auf. Ist der Kragenabschnitt aufgeklappt, so weist der Behälter senkrecht zu einer Längsrichtung des Behälters vorzugsweise im Wesentlichen die Form eines einseitig oder beidseitig abgeschnittenen Drachenvierecks auf. Betrachtet man ein Grundgebilde des Behälters als einen Kegel beziehungsweise einen Kegelstumpf, so ist der Kragenabschnitt im aufgeklappten Zustand vorzugsweise im Wesentlichen ein Teilbereicht einer Mantelfläche eines zweiten Kegelstumpfes, der an der ersten Behälteröffnung angeordnet ist und sich mit zunehmendem Abstand von dieser verjüngt. Besonders bevorzugt ist, wenn der Kragenabschnitt im aufgeklappten Zustand angeschrägt ist. Im gefalteten Zustand bedeutet das, dass der Schnitt im Drachenviereck nicht parallel zur Endlinie des Behältermantels verläuft. Besonders bevorzugt ist der Kragenabschnitt derart angeschrägt, dass er in einem Bereich, der hinsichtlich des Umfangs des Behältennantels den Befestigungselementen entgegengesetzt ist, mehr Material aufweist als auf der Umfangsseite, an welcher sich die Befestigungselemente befinden. Hierdurch wird der Behälter derart ausgestaltet, dass er, wenn er mit einem Kragenabschnitt versehen ist und dieser im aufgeklappten Zustand ist, derart ausgebildet, dass ein Herausfallen von Gegenständen aus der ersten Behälteröffnung erschwert beziehungsweise verhindert wird.

Bevorzugt weist der Kragenabschnitt eine Öffnung auf, die nicht größer ist als die erste Öffnung des Behälters. Weiter ist es bevorzugt, dass der Umfang der Öffnung des Kragenabschnitts und/oder der Umfang der ersten Öffnung des Behälters größenverstellbar ist. Dies kann zum Beispiel durch Vorsehen eines Kordelzugs bzw. eines Reißverschlusses realisiert sein. Hierdurch kann der Benutzer eine Öffnung an aktuelle Bedürfnisse und insbesondere an die aktuell zu transportierenden Gegenstände anpassen. Insbesondere kann der Benutzer die Öffnung auch ganz verschließen, um im Behälter befindliche Gegenstände vor Einflüssen von außen, insbesondere Dreck, Regen, Schnee, Sonneneinstrahlung und/oder Feuchtigkeit zu schützen.

Weiter ist es bevorzugt, dass der Behälter ausgelegt ist, entlang einer Längsachse gefaltet zu sein oder ein- oder mehrfach um eine Längsachse gewickelt zu sein bzw. zu werden. Weiter ist es bevorzügt, dass der Behälter in einem gefalteten bzw. gewickelten Zustand von einem oder mehreren Halteelementen gehalten werden kann. Die Halteelemente können unter anderem auch als Schnurelemente; Knopfelemente oder Reißverschlusselemente ausgebildet sein.

Ferner ist es bevorzugt, dass die Halteelemente zwei Eingriffselemente aufweisen, die an entgegen gesetzten Seiten der ersten Behälteröffnung montiert sind und die ausgelegt sind, miteinander in Eingriff zu sein. Entgegengesetzt bedeutet in diesem Zusammenhang, dass sie hinsichtlich der Umfangsrichtung entgegen gesetzt oder gegenüberliegend sind. Abermals ist unter dem Begriff Eingriff in diesem Zusammenhang jede Verbindung zu sehen, die einer Kraft widerstehen kann. Sie kann bevorzugt durch Vorsehen eines Klettverschlusses, durch Knopfvorrichtungen, vorzugsweise Druckknopfvorrichtungen, und/oder durch Schnüre erzeugt werden. Ebenso können Schnallen, Bänder und/oder Gurte vorgesehen sein.

Ganz besonders bevorzugt weist eines der Eingriffselemente Klettverschlussschlaufen und das andere der Eingriffselemente Klettverschlusswiderhaken auf. Durch das Vorsehen solcher Eingriffselemente kann eine Faltung beziehungsweise eine Wicklung des Behälters gehalten werden. Hierdurch ist es dem Benutzer möglich, den Behälter in engen Eingriff mit einem Gegenstand zu bringen, der sich in dem Behälter befindet. Ferner kann die erste Behälteröffnung hiermit bündig um einen langen Gegenstand geschlossen werden. Ebenso ist es möglich, dass die erste Behälteröffnung geschlossen wird, wenn kein Gegenstand aus ihr hervorragt. Hierdurch kann das Innere des Behälters und Gegenstände, die sich hierin befinden, vor Schmutz und/oder Nässe von außen geschützt werden. Es könnte es zum Beispiel möglich sein, einen Schirm, der sich im Behälter befindet, eng zu umwickeln. Hierdurch würde der Behälter im Gebrauch wesentlich weniger Platz einnehmen als wenn eine solche Wicklung nicht möglich wäre oder wenn Eingriffselemente, die eine solche Wicklung beziehungsweise Faltung halten würden, nicht vorgesehen werden. Dieses Merkmal trägt damit weiter zur einfachen Handhabung und Praktikabilität des Behälters bei.

Ferner können die Eingriffselemente derart ausgebildet sein, dass sie selber unterschiedliche Bereiche aufweisen. So kann ein Eingriffselement einen Eingriffsbereich aufweisen, der ausgelegt ist, mit einem anderen Element in Eingriff zu sein bzw. in Eingriff gebracht werden zu können, und einen Überbrückungsbereich. Der Eingriffsbereich kann über den Überbrückungsbereich mit dem Behältermantel verbunden sein. Der Überbrückungsbereich kann eine variable Länge haben, die vom Benutzer eingestellt werden kann. Ferner kann eine Eigenschaft, bspw. eine Längen- und/oder Elastizitätseigenschaft, eines Überbrückungsbereichs änderbar sein. Dies kann zum Beispiel dadurch erfolgen, dass Überbrückungsbereich ausgelegt ist, gedreht bzw. gewickelt zu werden und eine solche Eigenschaft vom Überbrückungsbereich von der Stärke und/oder Anzahl seiner Wicklung bzw. seiner Drehung abhängt.

Der Überbrückungsbereich kann alternativ oder zusätzlich ein Element zur Längenverstellung aufweisen. Dieses ist bevorzugt derart ausgestaltet, dass zumindest Teile des Überbrückungsbereichs ein- oder mehrfach hindurch geführt werden kann, vorzugsweise in verschiedenen Orientierungen bzw. Ausrichtungen. Hierdurch kann eine Länge des Überbrückungsbereichs, der Eingriffsbereich mit Behälter verbindet, eingestellt und fixiert werden. Die Fixierung findet vorzugsweise durch Festziehen entlang einer Richtung statt.

Ferner ist es bevorzugt, dass mindestens einem Eingriffselement, vorzugsweise allen Eingriffselementen, mindestens ein zusätzliches Korrespondenzelement zugeordnet ist. Jedes Korrespondenzelement ist ausgelegt, mit dem Eingriffselement, dem es zugeordnet ist, in Eingriff zu sein, wenn dieses Eingriffselement nicht mit dem anderen Eingriffselement in Eingriff steht und/oder wenn der Behälter nicht gefaltet bzw. gewickelt ist. In anderen Worten sind die Korrespondenzelemente bspw. ausgelegt, mit den Eingriffselementen in Eingriff zu sein, wenn der Behälter vom Benutzer nicht gesondert gefaltet und/oder gewickelt wird. Die Korrespondenzelemente können dann dafür sorgen dafür, dass das Eingriffselement, das ihm zugeordnet ist, in diesem Zustand an einem definierten Ort befestigt ist. So kann z.B., wenn ein Eingriffselement Klettverschlussschlaufen aufweist, das ihm zugeordnete Korrespondenzelement Klettverschlusswiderhaken aufweisen (und *vice versa*) und das Korrespondenzelement eines Druckknopfkopfes kann eine Druckknopfvertiefung aufweisen. Bevorzugt sind die Korrespondenzelemente so angeordnet, dass das Eingriffselement, welchem sie zugeordnet sind, in einem nicht vom Benutzer manipulierten Zustand einfach mit ihnen in Eingriff gebracht werden kann, also besonders bevorzugt in einer Nähe der Eingriffselementes, welchem sie zugeordnet sind. So kann insbesondere eine sicherere, störungsfreie und ggf. gleichermaßen optisch ansprechende Positionierung des Eingriffselements erreicht werden.

Zusätzlich oder alternativ können weitere Zusatzeingriffselemente an anderen Bereichen des Behälters angeordnet sein. So ist es zum Beispiel bevorzugt, Zusatzeingriffselemente an einer Begrenzung der ersten Öffnung bzw. an einer Begrenzung des Kragenabschnitts vorzusehen. Diese Zusatzeingriffselemente können dann miteinander oder mit einem der anderen beschriebenen Eingriffselemente in Eingriff gebracht werden. Hierdurch kann zum Beispiel ein Umfang der ersten Öffnung oder einer Öffnung des Kragenabschnitts eingestellt werden, wodurch vorzugsweise die oben genannten Vorteile erreicht werden können.

Weiterhin ist es bevorzugt, dass ein Innenvolumen des Behälters anpassbar ist, vorzugsweise hinsichtlich Volumenform und/oder Volumeninhalt. Insbesondere kann ein Volumen, das von dem Behältermantel eingeschlossen wird, durch Faltung und/oder Wicklung angepasst werden. Hierdurch kann der Benutzer den Behälter an seine aktuellen Bedürfnisse anpassen. Will der Benutzer den Behälter zum Beispiel für den Transport eines Hockeyschlägers verwenden, so ist im Allgemeinen einen andere Form bevorzugt als in der Situation, in der der Benutzer in erster Linie einen Fußball transportieren will. Die Volumenanpassbarkeit des Behälters stellt somit ein Merkmal dar, welches insbesondere den Einsatz des Behälters für den Transport verschiedener und verschieden geformter Gegenstände ermöglicht.

Insbesondere ist es auch bevorzugt, dass der Behälter ausgelegt ist, verschiedene und verschiedenartige Gegenstände gleichzeitig transportieren zu können. So können zum Beispiel in praktikabler Art und Weise gleichzeitig runde Gegenstände, zum Beispiel ein Fußball und längliche Gegenstände, zum Beispiel Schirme und/oder Hockeyschläger im Behälter transportiert werden. Gleiches gilt für harte, widerstandsfähige Gegenstände, wie bspw. Hockeschläger, und weiche, empfindliche Gegenstände, wie bspw. Blumen.

Vorzugsweise weist der Behälter eine Länge zwischen 0.3 m und 1.0 m, besonders bevorzugt zwischen 0.35 m und 0.7 m, ganz besonders bevorzugt zwischen 0.4 m und 0.6 m und am stärksten bevorzugt zwischen 0.45 m und 0.5 m auf. Ebenso ist es bevorzugt, dass die erste Behälteröffnung einen Umfang zwischen 0.5 m und 1.3 m aufweist, besonders bevorzugt zwischen 0.6 m und 1.2 m, ganz besonders bevorzugt zwischen 0.7 m und 1.1 In und am stärksten bevorzugt zwischen 0.8 m und 1.0 m. Diese Dimensionen eignen sich besonders gut, um den erfindungsgemäßen Behälter einerseits an Kinderwagen anzubringen und sind andererseits hinsichtlich der Anwendung bezüglich dem Verstauen und Transport verschiedener Gegenstände optimiert.

Es ist bevorzugt, dass der Behälter ein zusätzliches Fixierelement aufweist, das ausgelegt ist, mit mindestens einem der Eingriffselemente in Eingriff zu stehen. Das Fixierelement kann derart ausgestaltet sein, dass es an einen Abschnitt von dem Befestigungselement angeordnet werden und mit diesem in Eingriff gebracht werden kann. Weiter ist es bevorzugt, dass Fixierelement Klettverschlusshaken bzw. -widerhaken aufweist, um mit mindestens einem der Eingriffselemente in Eingriff gebracht werden zu können. Bevorzugt weist das Fixierelement einen Endabschnitt auf, der eine Schlaufe aufweist, durch die ein Abschnitt von Befestigungselement hindurch geführt werden kann. Vorzugsweise beträgt eine Länge des Fixierelements in etwa ein Drittel einer Länge des Behälters in Längsrichtung und bevorzugt zwischen 10% und 50% einer Länge des Behälters in Längsrichtung. Ferner kann Fixierelement ein relativ flexibles Material aufweisen, beispielsweise gewebtes Material.

Bevorzugt kann ein solcher Behälter ein oder mehrfach um eine Längsachse gewickelt werden. Ferner ist es auch möglich, dass Behälter in einer Richtung im Wesentlichen senkrecht zu einer Längsrichtung zusammengedrückt, geknautscht, geknittert bzw. "gekrumpelt" wird. Sowohl bei einer solchen Wicklung als auch bei einer Verringerung einer Ausdehnung durch Zusammenknautschen und Ähnlichen kann ein Endabschnitt des Fixierelements mit einem Eingriffsbereich vom Eingriffselement in Eingriff gebracht werden.

Alternativ kann das Fixierelement auch in Form eines Schlaufenelementes realisiert sein. Ein solches Schlaufenelement weist bevorzugt eine Schlaufe auf, die besonders bevorzugt elastisch ist. Schlaufe kann auch aus einem Band geformt sein und durch das Vorsehen eines Knoten eine Schlaufe bilden. Weiter weist dieses Schlaufenelement vorzugsweise ein Schlaufeneinstellelement auf, welches Schlaufenelement in zwei Unterschlaufen teilt und ferner ein Stoppelement, das ausgelegt ist, zu verhindern, dass Einstellelement von Schlaufenelement entfernt werden kann. Ein solches Schlaufenelement wird bevorzugt zwischen den Abschnitten und dem Befestigungselement eingeführt. Im Gebrauch kann es ferner von diesen Abschnitten und zusätzlich von einer Stange eines Kinderwagens begrenz sein. Ferner ist Schlaufenelement bevorzugt dazu ausgelegt, eine Außenseite eines Behälters in einem gewickelten und/oder kollabierten Zustand (zum Beispiel gefaltet, zusammengedrückt, geknautscht, geknittert oder gekrumpelt) zu umschließen und damit eine Ausdehnung eines Behälter zu fixieren.

Das Vorsehen derartiger Fixierelement und/oder Schlaufenelemente kann dazu geeignet sein, einen Behälter, der um eine Längsachse gewickelt oder anderweitig kollabiert ist, in diesem gewickelten Zustand zu halten bzw. zu fixieren, ohne, dass es notwendig ist, dass der Behälter zumindest teilweise um eine Stange eines Kinderwagens gewickelt wird.

Ebenso richtet sich die Erfindung auf ein System mit einem Kinderwagen und einem Behälter wie vorstehend beschrieben. Vorzugsweise weist der Kinderwagen Befestigungspunkte, bevorzugt entlang einer Stange auf, deren Verbindungslinie bzw. die im gewöhnlichen Gebrauch zur Waagerechten einen Winkel zwischen 20° und 70°, besonders bevorzugt zwischen 30° und 60°, ganz besonders bevorzugt zwischen 35° und 55° und am stärksten bevorzugt zwischen 40° und 50° einschließt. Der Behälter ist dann bevorzugt so an diesen Punkten bzw. an dieser Stange angebracht, dass die erste Öffnung an einer Seite angebracht ist, auf der der Kinderwagen einen Schiebe- bzw. Lenkgriff aufweist. Hierdurch kann der Benutzer des Kinderwagens, d.h. die Person, die den Kinderwagen schiebt, in einfacher und praktikabler Manier Gegenstände in den Behälter einführen oder Gegenstände daraus entfernen. Eine derartige Anordnung erhöht somit weiter die Handhabung und Praktikabilität eines solchen Systems. Ferner ist es ebenso bevorzugt, dass der Behälter an der Stange so angebracht ist, dass er in einer Draufsicht senkrecht zu einer Längsachse mit der Waagerechten (bevorzugt bei waagerechter Position des Kinderwagens) und/oder mit dem Untergrund (bevorzugt bei Position des Kinderwagens auf gegenüber der Waagerechten geneigtem Untergrund) einen Winkelbereich überdeckt, der ein Teilbereich ist von dem Winkelbereich zwischen -5° (vorzugsweise 0° und besonders bevorzugt 5°) und dem Winkel, der zwischen der Waagerechten bzw. dem Untergrund und der Kinderwagenstange gebildet wird. In anderen Worten ist also der Behälter so angeordnet, dass zumindest ein Großteil des Behälters mit der Waagerechen einen Winkel einschließt, der zwischen der Waagerechten und dem Winkel zwischen Waagerechten bzw. dem Untergrund und der Stange des Kinderwagens liegt. In anderen Worten kann also der Mantelbereich des Behälters, der einer Bodenfläche am nächsten ist, im Wesentlichen zur Bodenfläche parallel sein, wobei dies in diesem Zusammenhang eine Abweichung von etwa 5° in jede Richtung mit einschließen soll. Vorzugsweise schließt der Behälter bzw. seine Unterkante bzw. der angesprochene Mantelbereich mit der Waagerechten bzw. mit dem Untergrund einen positiven Spitzen Winkel θ, ein, der sich in Richtung der ersten Öffnung öffnet. Dies trägt abermals dazu bei, dass Gegenstände, die in dem Behälter transportiert werden, vor dem Herausfallen bewahrt werden. Eine solche Befestigung an einem Kinderwagen oder sonstigem Mobilitätsgerät wird bereits durch die Ausgestaltung des Behälters, wie vorstehende beschrieben, vorteilhaft ermöglicht. Die seitliche Anordnung, also entlang der Fahrtrichtung, am Kinderwagen ist optische und funktional besonders vorteilhaft. Auch die einfache geometrische Form des Behälters ist gleichermaßen funktional, wie vorstehend beschrieben, und optisch ansprechend. Der Behälter kann verschiedne optische Designs wie Farben und Muster aufweisen und insbesondere auf die Farbgebung des Mobilitätsgeräts abgestimmt werden. Der Behälter eignet sich insbesondere, an die aufzunehmenden Gegenstände, die Umgebungsbedingungen und/oder das Mobilitätsgerät angepasst zu werden. Bevorzugt ist der Behälter derart am Kinderwagen angeordnet, dass ein Kind bzw. ein Baby, welches sich im Kinderwagen befindet, nicht mit den transportieren Gegenständen in Kontakt kommt bzw. kommen kann bzw. diese nicht erreichen kann.

Die Erfindung umfasst die folgenden Aspekte.
1. Behälter,
   der vorzugsweise im Wesentlichen die Form einer Spitztüte aufweist,
   vorzugsweise mit einem Behältermantel mit einer Innenfläche und einer Außenfläche, einer ersten Behälteröffnung an einem Ende des Behältermantels und
   vorzugsweise mit einem oder mehreren Befestigungselementen zum Anbringen des Behälters, insbesondere an einem Kinderwagen, die im Bereich der Außenfläche des Behälters angeordnet sind,
   vorzugsweise zum Aufnehmen und Transportieren von länglichen Gegenständen.
2. Behälter nach Aspekt 1, wobei der Behälter in einer Draufsicht senkrecht zu einer Längsachse des Behälters eine Winkelausdehnung von nicht mehr als 60°, vorzugsweise zwischen 10° und 55°, besonders bevorzugt zwischen 20° und 50° und ganz besonders bevorzugt zwischen 35° und 50° aufweist.
3. Behälter nach einem der vorhergehenden Aspekte, wobei die Befestigungselemente ausgelegt sind, den Behälter an mindestens eine Stange eines Kinderwagens anzubringen und vorzugsweise, insbesondere lösbar, zu befestigen.
4. Behälter nach einem der vorhergehenden Aspekte, wobei die Befestigungselemente ausgelegt sind, den Behälter an eine Stange eines Kinderwagens anzubringen, die im gewöhnlichen Gebrauch zur Waagerechten einen Winkel zwischen 20° und 70°, bevorzugt zwischen 30° und 60°, besonders bevorzugt zwischen 35° und 55° und ganz besonders bevorzugt zwischen 40° und 50° bildet, wobei der Behälter vorzugsweise ausgelegt ist an der Stange so angebracht zu werden, dass er in einer Draufsicht senkrecht zu einer Längsachse mit der Waagerechten einen Winkelbereich überdeckt, der ein Teilbereich ist von dem Winkelbereich zwischen -5° und dem Winkel zwischen der Waagerechten und der Kinderwagenstange, wobei das Winkelvorzeichen so definiert ist, dass der Winkel zwischen der Waagerechten und der Stange des Kinderwagens positiv ist, und weiter vorzugsweise so angebracht zu werden, dass die erste Öffnung an einer Seite angebracht ist, auf der der Kinderwagen einen Schiebegriff aufweist.
5. Behälter nach einem der vorhergehenden Aspekte mit mindestens 2, vorzugsweise genau 2 oder 3, Befestigungselementen zur Anbringung des Behälters an einen Kinderwagen.
6. Behälter nach einem der vorhergehenden Aspekte, wobei die Befestigungselemente ausgelegt sind, die Stange des Kinderwagens in einer Umfangsrichtung der Stange zumindest teilweise zu umschließen, vorzugsweise ganz zu umschließen, und die Befestigung des Behälters hierdurch realisiert wird.
7. Behälter nach einem der vorhergehenden Aspekte, wobei die Befestigungselemente jeweils zwei Abschnitte aufweisen, die miteinander in Eingriff gebracht werden können.
8. Behälter nach Aspekt 7, wobei jeweils einer der zwei Abschnitte Klettverschlussschlaufen und der andere der beiden Abschnitte Klettverschlusswiderhaken aufweisen und diese so angeordnet sind, dass sie miteinander in Eingriff stehen können, wenn die zwei Abschnitte die Stange zumindest teilweise, vorzugsweise vollständig umschließen.
9. Behälter nach einem der vorhergehenden Aspekte mit einer zusätzlichen Verstärkungsstange, die, vorzugsweise an der Innenfläche des Behälters, so angeordnet ist, dass sie, wenn der Behälter an einer Stange des Kinderwagens angebracht ist, im Wesentlichen zu dieser Stange parallel ist und die sich zumindest über einen Großteil einer Längsrichtung des Behältermantels erstreckt.
10. Behälter nach Aspekt 9, wobei die Verstärkungsstange Holz, Metall und/oder Kunststoff aufweist.
11. Behälter nach Aspekt 9 oder 10, wobei sich die Befestigungselemente in Bereichen an der Außenfläche nach außen erstrecken, an deren korrespondierenden Innenfläche die Verstärkungsstange angeordnet ist.
12. Behälter nach einem der vorhergehenden Aspekte und zusätzlich mit einer Schlaufe in der ersten Behälteröffnung, durch die längliche Gegenstände fixiert werden können.
13. Behälter nach Aspekt 12, wobei das Verhältnis aus einem Umfang der Behälteröffnung und einem Umfang der Schlaufe zwischen 1 und 6, bevorzugt zwischen 1,5 und 5, besonders bevorzugt zwischen 2 und 4 und ganz besonders bevorzugt zwischen 2,5 und 3,5 liegt.
14. Behälter nach Aspekt 12 oder 13, wobei die Schlaufe elastisch ist.
15. Behälter nach einem der Aspekte 12 bis 14, wobei die Schlaufe ein Einstellelement zur Längen- bzw. Umfangsverstellung aufweist.
16. Behälter nach Aspekte 15, wobei das Einstellelement ausgelegt ist, zwei Punkte bzw.
   Bereiche der Schlaufe zu fixieren, sodass zwei Unterschlaufen gebildet werden, die durch die Punkte bzw. Bereiche begrenzt sind.
17. Behälter nach einem der Aspekte 12 bis 16, wobei die Schlaufe in einem dem Befestigungselement zugewandten Bereich der ersten Öffnung angeordnet ist.
18. Behälter nach einem der vorhergehenden Aspekte, der zusätzlich eine zweite Behälteröffnung an einem Ende des Behältermantels aufweist, das dem Ende der ersten Behälteröffnung entgegengesetzt ist.
19. Behälter nach Aspekt 18, wobei die zweite Behälteröffnung ausgelegt ist, um Flüssigkeiten abzuleiten und/oder um lange Gegenstände hierdurch zu führen.
20. Behälter nach einem der vorhergehenden Aspekte, der zusätzlich einen ein- und ausklappbaren Kragenabschnitt aufweist, der in einem eingeklappten Zustand umfangsseitig von dem Behältermantel umgeben ist und der sich in einem ausgeklappten Zustand mit zunehmendem Abstand vom Behältermantel verjüngt und insbesondere nahe des Mantelabschnittes einen größeren Umfang aufweist als weiter davon entfernt.
21. Behälter nach Aspekt 20, wobei der Kragenabschnitt im ausgeklappten Zustand angeschrägt ist.
22. Behälter nach einem der vorhergehenden Aspekte, wobei der Behälter ausgelegt ist, entlang einer Längsachse gefaltet und/oder gewickelt zu sein und der Behälter mittels einem oder mehreren Halteelementen im gefalteten bzw. gewickelten Zustand gehalten werden kann.
23. Behälter nach Aspekt 22, wobei die Halteelemente zwei Eingriffselemente aufweisen, die an entgegen gesetzten Enden der ersten Behälteröffnung montiert sind und die ausgelegt sind, miteinander in Eingriff zu sein, wenn der Behälter entlang einer Längsachse gefaltet und/oder gewickelt ist.
24. Behälter nach Aspekt 23, wobei die Eingriffselemente jeweils einen Eingriffsbereich und einen Überbrückungsbereich aufweisen, der den Eingriffsbereich mit dem Behälter verbindet, wobei der Überbrückungsbereich ein Element zur Längenverstellung aufweist.
25. Behälter nach Aspekt 22 oder 23, wobei eines der Eingriffselemente Klettverschlussschlaufen und das andere der beiden Eingriffselemente Klettverschlusswiderhaken aufweisen.
26. Behälter nach einem der Aspekte 22 bis 25, wobei der Behälter ein Fixierelement aufweist, das ausgelegt ist, wenn der Behälter um eine Längsachse gewickelt oder senkrecht zu seiner Längsachse kollabiert ist, mit mindestens einem der Halteelemente, vorzugsweise mit einem der Eingriffselemente derart in Eingriff zu stehen, dass der Behälter im gewickelten bzw. kollabierten Zustand fixiert wird, ohne dass die Wicklung bzw. Kollabierung Elemente, die nicht dem Behälter zugeordnet sind, einschließen muss.
27. Behälter nach Aspekt 22, 23 oder 25, wobei die Halteelemente länglich ausgebildet sind und sich vorzugsweise im nicht haltenden Zustand entlang zweier Längsachsen des Behälters erstrecken und sich vorzugsweise im haltenden Zustand entlang einer Längsachse des Behälters erstrecken.
28. Behälter nach Aspekt 27, wobei die Haltelemente einen Reißverschluss aufweisen.
29. Behälter nach einem der vorhergehenden Aspekte, wobei ein Innenvolumen des Behälters anpassbar ist.
30. Behälter nach einem der vorhergehenden Aspekte, wobei der Behältermantel ein gewebtes Material aufweist, vorzugsweise Stoff und/oder einen gewebten Kunststoff, der besonders bevorzugt wasserabweisende oder wasserdichte Fasern wie Polyester und/oder Nylon aufweist.
31. Behälter nach einem der vorhergehenden Aspekte, wobei der Behältermantel eine Länge zwischen 0,25 m und 1 m, bevorzugt zwischen 0,3 und 0,7 m, besonders bevorzugt zwischen 0,3 m und 0,6 m und ganz besonders bevorzugt zwischen 0,35 m und 0,55 m aufweist.
32. Behälter nach einem der vorhergehenden Aspekte, wobei die erste Behälteröffnung einen Umfang zwischen 0,5 m und 1,3 m, bevorzugt zwischen 0,6 und 1,2 m, besonders bevorzugt zwischen 0,7 m und 1,1 m und ganz besonders bevorzugt zwischen 0,8 m und 1,0 m aufweist.
33. Behälter nach einem der vorhergehenden Aspekte, wobei die zweite Behälteröffnung vorzugsweise einen Umfang zwischen 4 cm und 12 cm, besonders bevorzugt zwischen 5 cm und 10 cm und ganz besonders bevorzugt zwischen 6 cm und 8 cm aufweist und/oder wobei das Verhältnis zwischen dem Umfang der ersten und dem Umfang der zweiten Behälteröffnung zwischen 2 und 30, besonders bevorzugt zwischen 6 und 20, ganz besonders bevorzugt zwischen 10 und 15 und ganz besonders bevorzugt zwischen 12 und 14 liegt.
34. Behälter nach einem der vorhergehenden Aspekte, wobei der Behälter ausgelegt ist, lange Gegenstände wie Hockeyschläger aufzunehmen und zu transportieren.
35. Behälter nach einem der vorhergehenden Aspekte, wobei der Behälter ausgelegt ist, runde und sperrige Gegenstände wie Fußbälle aufzunehmen und zu transportieren.
36. System mit einem Kinderwagen und einem Behälter nach einem der vorhergehenden Aspekte.
37. System nach Aspekt 36, wobei der Kinderwagen eine Stange aufweist, die im gewöhnlichen Gebrauch zur Waagerechten einen Winkel zwischen 20° und 70°, bevorzugt zwischen 30° und 60°, besonders bevorzugt zwischen 35° und 55° und ganz besonders bevorzugt zwischen 40° und 50° bildet, und der Behälter an dieser Stange so angebracht ist, dass die erste Öffnung an einer Seite angebracht ist, auf der der Kinderwagen einen Schiebegriff aufweist.
38. System nach Aspekt 37, wobei der Behälter an der Stange so angebracht ist, dass er in einer Draufsicht senkrecht zu einer Längsachse mit der Waagerechten einen Winkelbereich überdeckt, der ein Teilbereich ist von dem Winkelbereich zwischen -5° und dem Winkel zwischen der Waagerechten und der Kinderwagenstange, wobei das Winkelvorzeichen so definiert ist, dass der Winkel zwischen der Waagerechten und der Stange des Kinderwagens positiv ist.

Die Erfindung wird nun an Hand der beigefügten Zeichnungen beschrieben. Es zeigen
- Fig. 1: eine perspektivische schematische Ansicht eines Ausführungsbeispiels eines erfindungsgemäßen Behälters,
- Fig. 2: eine schematische perspektivische Ansicht einer Spitztüte im Einklang mit der Erfindung zur Verdeutlichung von beispielhaften Koordinaten, die in der Beschreibung verwendet werden,
- Fig. 3: einen Schnittansicht entlang der Ebene, die durch Punkte A, B und Linie III in Fig. 2 definiert ist,
- Fig. 4: eine schematische Draufsicht (und teilweise Durchsicht) auf einen erfindungsgemäßen Behälter senkrecht zu einer Längsachse des Behälters gemäß einer weiteren Ausführungsform,
- Fig. 5: eine schematische Draufsicht (und teilweise Durchsucht) wie in Fig. 5, wobei der Behälter aus Fig. 4 in einem anderen Zustand vorliegt,
- Fig. 6: verschiedene bevorzugte Grundformen erfindungsgemäßer Behälter in Draufsicht senkrecht auf eine Längsachse,
- Fig. 7a: eine schematische Draufsicht auf eine Konfiguration einer Ausführungsform eines erfindungsgemäßes Behälters senkrecht zu einer Längsachse des Behälters,
- Fig. 7b: eine schematische Draufsicht auf eine weitere Konfiguration einer Ausführungsform eines erfindungsgemäßes Behälters senkrecht zu einer Längsachse des Behälters und

- Fig. 8-13: perspektivische schematische Ansichten von Systemen mit einem Kinderwagen und einem Behälter gemäß verschiedener Ausführungsformen bzw. verschiedener Anpassungen der Erfindung,
- Fig. 14: eine schematische Draufsicht auf eine weitere Ausführungsform eines erfindungsgemäßen Behälters,
- Fig. 15: eine vergrößerte Teilansicht des Behälters aus Fig. 14,
- Fig. 16-18: schematische Teil-Draufsichten auf eine weitere Konfigurationen des in Fig. 14 gezeigten Behälters,
- Fig. 19: eine schematische Draufsicht auf eine weitere Konfiguration des in Fig. 14 gezeigten Ausführungsbeispiels eines erfindungsgemäßen Behälters,

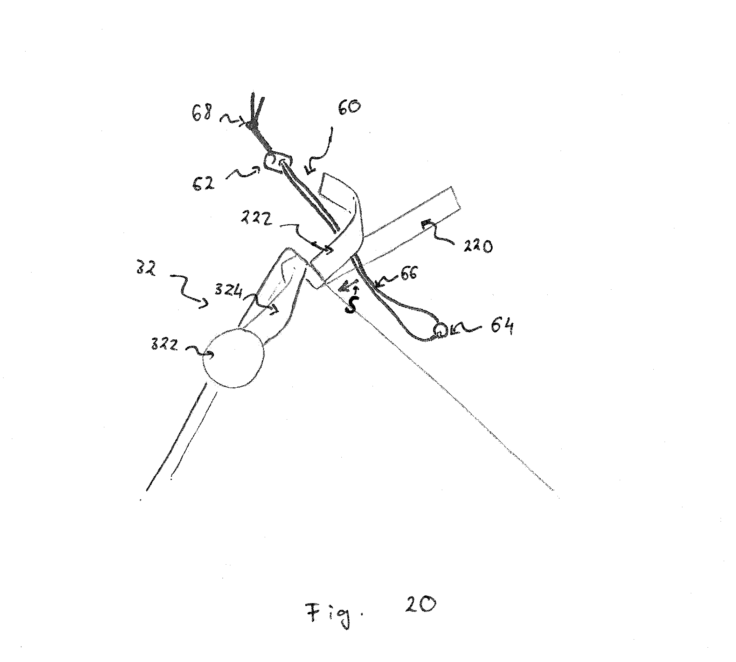

- Fig. 20: eine vergrößerte Teilansicht einer weitere Ausführungsform des erfindungsgemäßen Behälters,
- Fig. 21: eine perspektivische Ansicht auf ein System, das einen Kinderwagen und einen Behälter aufweist, gemäß einer Ausführungsform der Erfindung, und
- Fig. 22: eine schematische Teildraufsicht auf einen Bereich eines Behälters gemäß einer weiteren Ausführungsform der Erfindung.

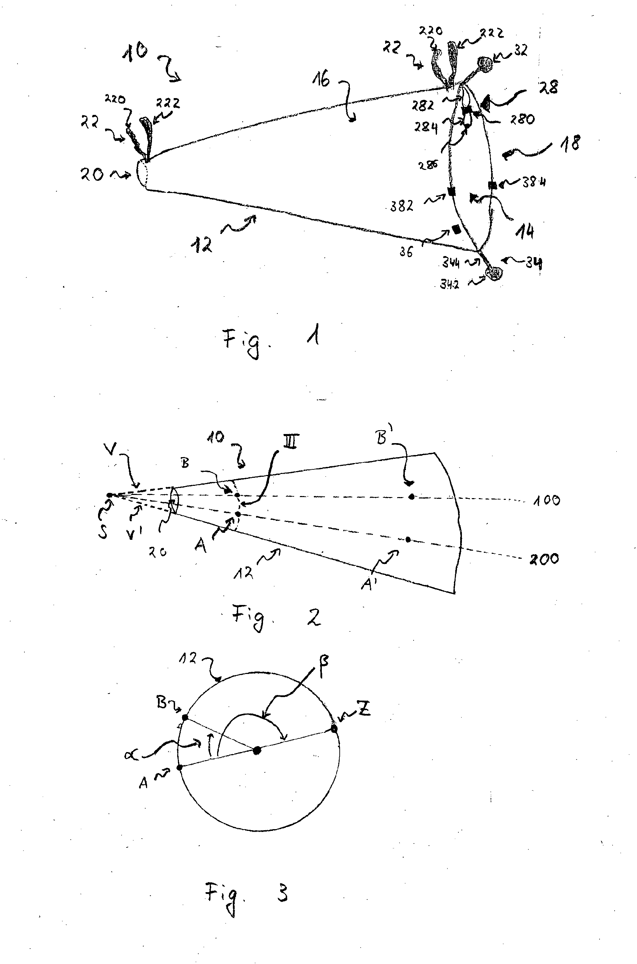

Fig. 1 zeigt eine perspektivische Ansicht eines Ausführungsbeispiels der Erfindung. So ist in Fig. 1 ein Behälter 10 dargestellt, der im Wesentlichen die Form einer Spitztüte aufweist. Behälter 10 weist ferner einen Behältermantel 12 mit einer Behälteraußenfläche 16 und einer Behälterinnenfläche 14 auf. An einem ersten Ende des Behältermantels 12 befindet sich eine erste Öffnung 18. Durch Behälteröffnung 18 können unhandliche und/oder längliche Gegenstände durchgeführt werden. Beispiele hierfür sind unter anderem Blumen, (Stangen-)Brote, Schirme, Hockeyschläger und dergleichen. Typischerweise weist der Behältermantel 12 eine Länge zwischen 0.3 m und 1.0 m und ganz besonders bevorzugt in einem Bereich um 0.5 m auf. Das in Fig. 1 gezeigte Ausführungsbeispiel weist ferner eine zweite Behälteröffnung 20 auf, die an einem Ende des Behältermantels 12 angebracht ist, das dem Ende der ersten Behälteröffnung 18 entgegen gesetzt ist. Längliche Gegenstände, z.B. die obengenannten, können hiermit durch den gesamten Behälter hindurchgeführt werden und aus diesem, genauer aus der zweiten Behälteröffnung 20, hervorragen. Ferner weist das gezeigte Ausführungsbeispiel zwei Befestigungselemente 22 auf. Mittels dieser Befestigungselemente 22 kann der Behälter an einen Kinderwagen angebracht werden. Befestigungselemente 22 sind im Bereich der Außenfläche 16 des Behälters angeordnet. Sie erstrecken sich vom Behälter nach außen. In einer besonders bevorzugten Ausführungsform weisen die Befestigungselemente 22 zwei Abschnitte 220, 222 auf. Diese können miteinander in Eingriff gebracht werden. Unter Eingriff ist in diesem Zusammenhang jede Verbindung zu sehen, die einer Kraft widerstehen kann. Ganz besonders bevorzugt weist der erste Abschnitt 220 jeweils Klettverschlusshaken und der zweite Abschnitt 222 jeweils Klettverschlusswiderhaken auf, die so angeordnet sind, dass sie miteinander in Eingriff stehen können, wenn die zwei Abschnitte eine Stange eines Kinderwagens zumindest teilweise umschließen.

Zusätzlich ist im gezeigten Ausführungsbeispiel im Bereich der ersten Behälteröffnung 18 ein Schlaufenelement 28 angebracht. Schlaufenelement 28 weist im gezeigten Ausführungsbeispiel eine Schlaufe aus einem elastischen Material auf, die durch ein Einstellelement 280 in zwei Unterschlaufen 282 und 284 geteilt werden kann. Einstellelement 280 kann vorzugsweise ein Einstellelement aus Kunststoff sein, welches an der Schlaufe verstellbar angebracht werden kann. Ein solches Einstellelement 280 ist einem Einstellelement, wie dies zum Beispiel aus Jackenzügen bekannt ist, ähnlich.

Ferner weist Schlaufenelement 28 Stoppelement 286 auf, das verhindert, dass das Schlaufeneinstellelement 280 ungewollt von Schlaufenelement 28 entfernt wird. Durch Schlaufenelement 28 können längliche Gegenstände zusätzlich fixiert werden. Ferner zeigt Fig. 1 zwei Eingriffselemente 32, 34, die in einer Umfangsrichtung des Behälters 10 beziehungsweise des Behältermantels 12 an entgegen gesetzten Enden montiert sind. Diese Eingriffselemente 32, 34 sind dazu ausgelegt, miteinander in Eingriff zu stehen. Sie können miteinander in Eingriff gebracht werden, indem Behälter 10 um eine Längsachse gefaltet oder mehrfach um eine Längsachse gewickelt zu sein. Vorzugsweise weisen die Eingriffselemente 32, 34 korrespondierende Klettverschlusshaken und Klettverschlusswiderhaken auf. Hierdurch kann insbesondere die erste Behälteröffnung 18 passend zu den transportierten Gegenständen verkleinert und angepasst werden. Eingriffselement 34 weist ferner Eingriffsbereich 342 und Überbrückungsbereich 344 auf. Typischer Weise weist Eingriffsbereich 344 die Elemente auf, die ausgelegt sind, in Eingriff zu treten. Vorteilhafterweise weist Eingriffsbereich 342 zum Beispiel Klettverschlusswiderhaken auf. Überbrückungsbereich 344 ist hingegen dazu ausgelegt, Eingriffsbereich 344 mit Behältermantel 12 zu verbinden. Typischerweise ist Überbrückungsbereich 344 aus einem dem Behältermaterial 12 ähnlichen oder gleichen Material geformt oder weist dieses auf. Ferner ist in Fig. 1 Korrespondenzelement 36 gezeigt, welches Eingriffselement 34 zugeordnet ist. Dieses kann, wenn Eingriffselement 34 Klettverschlusswiderhaken aufweist, Klettverschlussschlaufen aufweisen. Es ist ausgelegt, mit Eingriffselement 34 in Eingriff zu sein, wenn der Behälter 10 bzw. Behältermantel 12 nicht gewickelt bzw. nicht wesentlich gefaltet ist. In anderen Worten können diese beiden Elemente in einem "Ruhezustand" bzw. in einem nicht manipulierten Zustand in Eingriff gebracht werden. Obwohl dies nicht explizit für Eingriffselement 32 gezeigt ist, ist dem Fachmann klar, dass ein ähnliches Korrespondenzelement ebenso für dieses Eingriffselement vorgesehen sein kann.

Ferner zeigt Fig. 1 auch Zusatzeingriffselemente 382 und 384. Diese können zum Beispiel auch mit Eingriffselement 34 in Eingriff gebracht werden. In Fortführung des vorstehenden Beispiels, in welchem Eingriffselement 34 Klettverschlusswiderhaken aufweist, können Zusatzeingriffselemente 382 und 384 Klettverschlussschlaufen aufweisen. Der "untere" Bereich von Behälter 10, d.h. ein Bereich, der dem Bereich, an welchem Schlaufenelement 28 angeordnet ist, umfangsseitig entgegengesetzt ist, kann dann gefaltet werden, sodass Eingriffselement 34 mit Zusatzeingriffselementen 382 und 384 in Eingriff gebracht wird. Hierdurch kann Öffnung 18 in ihrer Größe angepasst werden.

Behälter 10 weist im Wesentlichen die Form einer Spitztüte auf. Behälter 10 beziehungsweise Behältermantel 12 weist vorzugsweise gewebtes Material, vorzugsweise Stoff und/oder einen gewebten Kunststoff, der besonders bevorzugt wasserabweisende bzw. wasserdichte Fasern wie Polyester und/oder Nylon aufweist, auf. Das heißt in einer bevorzugten Ausführungsform ist Behälter 10 nicht formstabil. Behälter 10 kann also sowohl zusammengefaltet als auch "aufgebläht" sein. Im "aufgeblähten" Zustand weist Behälter 10 im Wesentlichen eine konische beziehungsweise kegelstumpfförmige Form auf.

Diese ist zum Beispiel in Figs. 2 und 3 gezeigt. Im Wesentlichen konisch beziehungsweise im Wesentlichen kegelstumpfförmig bedeutet, dass der Behältermantel 12 im Wesentlichen Bereichen einer Kegeloberfläche entspricht. Fig. 2 zeigt eine schematische Ansicht eines Behälters 10, der im Wesentlichen die Form einer Spitztüte aufweist. Das gezeigte Ausführungsbeispiel weist außerdem abermals eine zweite Behälteröffnung 20 auf. Daher läuft Behälter 10 beziehungsweise Behältermantel 12 nicht in einem Punkt eines Kegels zusammen. Verlängert man aber die äußeren Begrenzungslinien des in Fig. 2 gezeigten Ausführungsbeispiels mit Verbindungslinien V, V', so laufen diese in einer Kegelspitze S zusammen. Behälter 10 beziehungsweise Behältermantel 12 liegt dann im Wesentlichen (im "aufgeblähten" Zustand) auf einem Konus, beziehungsweise einem Kegel mit Spitze S. Es wird nun Bezug genommen auf Punkte A, B, A' und B' in Fig. 2. Auf dem obenbeschriebenen Kegelmantel kann jeder Punkt mittels eines Abstands von Kegelspitze S und einem Winkel α in Umfangsrichtung beschrieben werden (siehe auch Fig. 3). Punkte A und B sind dargestellt, den gleichen Abstand zur Kegelspitze S zu haben. Fig. 3 zeigt einen Schnitt entlang der Ebene, die durch die Punkte A, B und deren Verbindungslinie III auf der Kegeloberfläche gebildet ist. In diesem Querschnitt weist der Behältermantel 12 im aufgeblähten Zustand im Wesentlichen die Form eines Kreises auf. Punkte A und B, die den gleichen Abstand zur Kegelspitze S haben, sind daher auf demselben Querschnittskreis des Behältermantels 12 zu sehen. Zwischen ihnen wird Umfangswinkel α aufgespannt. Der in Fig. 3 dargestellte Punkt Z weist im Vergleich zum Punkt A einen Umfangswinkel β von im Wesentlichen 180° auf. Diese beiden Punkte sind in Umfangsrichtung im Wesentlichen entgegengesetzt. Dies gilt auch für die beiden Eingriffselemente 32 und 34, die in Fig. 1 dargestellt sind.

In Fig. 2 sind ferner Punkte A' und B' dargestellt. Diese verfügen jeweils über den gleichen Umfangswinkel wie Punkte A und B. In anderen Worten unterscheiden sich Punkte A und A' (beziehungsweise B und B') also lediglich in deren Abstand von Kegelspitze S, nicht aber in Umfangswinkelrichtung. Zwischen Punkten A und A' beziehungsweise B und B' verlaufen Verbindungslinien, die zu Achsen 200, 100 parallel sind. Jede solche Achse 100, 200, die auf dem Behältermantel verläuft und deren Umfangswinkel sich mit Abstand zur Kegelspitze S nicht ändert, definiert eine Längsachse des Behälters 10 beziehungsweise des Behältermantels 12. Mit Bezug auf diese Längsachsen ist ferner zu bemerken, dass sich Behälter 10 beziehungsweise Behältermantel 12 nicht gleichmäßig entlang allen Längsachsen auf einem Kegel zu erstrecken braucht. So ist es zum Beispiel bevorzugt, dass Behältermantel 12 in einem Bereich, der der den Befestigungselementen 22 zugeordnet ist, in Umfangsrichtung entgegengesetzt ist, eine größere Erstreckung in Längsrichtung aufweist als in den anderen Bereichen und insbesondere als der Bereich, der Befestigungselementen 22 zugeordnet ist.

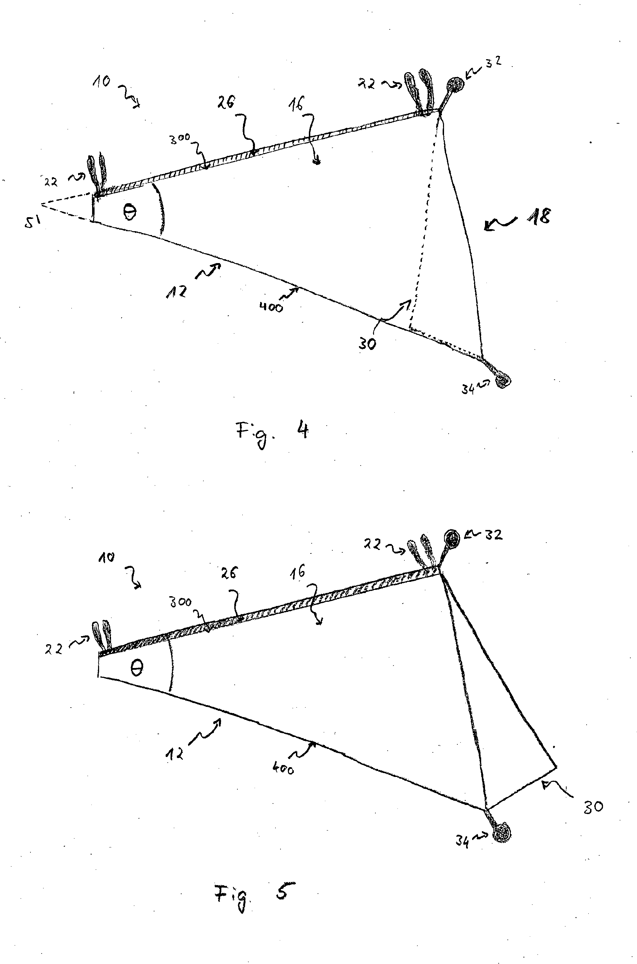

Dies ist auch in Figuren 4 und 5 dargestellt. Figuren 4 und 5 zeigen Ansichten, die im Wesentlichen zu einer Längsrichtung senkrecht sind. Da Behälter 10 beziehungsweise Behältermantel 12 vorzugsweise aus einem nicht formstabilen Material geformt sind, kann eine solche Ansicht auch dadurch erzeugt werden, dass Behälter 10 beziehungsweise Behältermantel 12 derart aufeinander gefaltet wird, dass sich Bereiche der Innenfläche 14 berühren. Wie Figuren 4 und 5 zu entnehmen ist, weist Behälter 10 verschiedene Längenausdehnungen entlang Längsachsen 300 und 400 auf. Weiterhin ist Figuren 4 und 5 zu entnehmen, dass Behälter 10 beziehungsweise Behältermantel 12, insbesondere im gefalteten Zustand beziehungsweise in einer Draufsicht senkrecht zu einer Längsachse im Wesentlichen die Form eines Dreiecks, beziehungsweise eines abgeschnittenen Dreiecks beziehungsweise eines Trapezes aufweist. Die Winkelausdehnung θ dieses Trapezes ist vorzugsweise spitz und beträgt im gezeigten Ausführungsbeispiel in etwa 25°, gemessen von einer konstruierten Dreiecksspitze S'. Neben den Elementen, die schon im Zusammenhang mit Fig. 1 beschrieben wurden, zeigen die in Fig. 4 und 5 dargestellten Ausführungsbeispiele ferner eine Verstärkungsstange 26. Verstärkungsstange 26 weist im Wesentlichen den gleichen Umfangswinkel (wie in Fig. 3 beschrieben) auf wie Befestigungselemente 22. Verstärkungstange 26 ist also in Umfangsrichtung auf der gleichen Seite angeordnet wie Befestigungselemente 22. Weiterhin ist in Figuren 4 und 5 Kragenabschnitt 30 dargestellt. Kragenabschnitt 30 ist im Bereich der ersten Öffnung 18 mit Behältermantel 12 verbunden. Kragenabschnitt 30 kann eingeklappt (wie in Fig. 4 gezeigt) und ausgeklappt (wie in Fig. 5 gezeigt) werden. Im eingeklappten Zustand ist Kragen 30 im "Inneren" von Behälter 10 verstaut. In anderen Worten liegt Kragenabschnitt 30 im eingeklappten Zustand an Behälterinnenfläche 14 an. Es ist aber gemäß hier nicht gezeigten Ausführungsformen auch möglich, dass Kragenabschnitt 30 nach außen gefaltet wird, d.h. im eingeklappten Zustand den Behältermantel 12 außenseitig umgibt. Im ausgeklappten Zustand (Fig. 5) "verlängert" Kragenabschnitt 30 Behälter 10. Kragenabschnitt 30 ist vorteilhafter Weise so ausgestaltet, dass er sich mit zunehmendem Abstand von Behälteröffnung 18 verjüngt. Insbesondere kann dies bedeuten, dass Kragenabschnitt 30 nahe des Mantelabschnitts 12 beziehungsweise nahe von Behälteröffnung 18 einen größeren Umfang aufweist als weiter davon entfernt. Ferner ist es, wie in Fig. 5 gezeigt, bevorzugt, dass Kragenabschnitt 30 im aufgeklappten Zustand angeschrägt ist. Insbesondere ist es bevorzugt, dass Kragenabschnitt 30 sich in einem umfangsseitigen Bereich, der Befestigungselementen 22 entgegengesetzt ist, weiter erstreckt als in dem umfangsseitigen Bereich, der Befestigungselementen 22 zugeordnet ist.

Im Gebrauch können Befestigungselemente 22 dazu genutzt werden, den Behälter 10 an einem Kinderwagen, bspw. an einer Stange eines Kinderwagens, zu befestigen. Verstärkungsstange 26 verläuft dann im Wesentlichen parallel zu der Stange des Kinderwagens, an dem Behälter 10 befestigt wird. Die Verstärkungstange 26 vermag der Behältervorrichtung 10 weitere Stabilität zu verleihen. Einerseits gilt dies für Behälter 10 im Allgemeinen, andererseits aber auch insbesondere für die Befestigung von Behälter 10 an einem Kinderwagen. Typischerweise verläuft die Stange eines Kinderwagens, an dem Behälter 10 angebracht wird, so, dass sie mit der Waagerechten einen Winkel zwischen 20° und 70°, besonders bevorzugt zwischen 40° und 50° einschließt. Im Gebrauch ist Behälter 10 dann so angeordnet, dass der Umfangsseitenbereich der Befestigungselemente 22, Verstärkungsstange 26 und Schlaufenelement 28 aufweist, "oben" angeordnet ist. Solange keine weiteren Vorkehrungen getroffen werden, insbesondere solange Eingriffselement 34 nicht mit Eingriffelement 32 in Eingriff gebracht wird, ist der Umfangsseitenbereich, der Eingriffselement 34 und die längere Umfangsseite von Kragenabschnitt 30 aufweist, "unten" angeordnet. Besonders bevorzugt ist es, dass der Behälter 10 und jede Längsachse hiervon im normalen Gebrauch einen Winkel größer -5° mit der Waagerechten einschließt, wobei ein positiver Winkel dadurch definiert sein soll, dass der Winkel, den die Stange eines Kinderwagens, an dem der Behälter mit Befestigungselementen 22 angebracht ist, mit der Waagerechten einschließt, ebenso positiv sein soll. Mit anderen Worten oder alternativ ist der Behälter so ausgelegt, dass im Gebrauch und insbesondere bei Befestigung ein einem Kinderwagen, die Unterseite bzw. Unterkante 400 des Behälters im Wesentlichen waagerecht (insbesondere im Gebrauch auf der Ebene senkrecht zur Schwerkraft) verläuft und, falls geneigt, vorzugsweise derart geneigt ist, dass der Winkel zur Waagerechten positiv ist und die erste Gehälteröffnung 18 nach oben (gegen die Schwerkraft) weist.

In einer solchen Anordnung können nun längliche Gegenstände, z.B. Hockeyschläger, Stangenbrote, Schirme und/oder längliche Blumen durch die erste Behälteröffnung 18 in den Behälter eingeführt werden. Gerade wenn es sich um längliche Gegenstände handelt, die weiterer Stabilisierung bedürfen, kann es besonders bevorzugt sein, ein Ende dieser Gegenstände mit Schlaufenelement 28 zu befestigen. So kann zum Beispiel ein Hockeyschläger oder auch ein Schirm so in Behälter 10 angeordnet werden, dass ein Ende aus der zweiten Behälteröffnung 20 hervorragt und das zweite Ende aus Behälteröffnung 18 hervorragt, wobei der längliche Gegenstand zusätzlich durch Schlaufenelement 28 befestigt ist. In einem nächsten Schritt kann nun der Behälter derart angepasst werden, dass sein Umfang auf die Dimensionen des länglichen Gegenstands angepasst werden. Dies kann zum Beispiel dadurch geschehen, dass Behälter 10 beziehungsweise Behältermantel 12 derart gefaltet wird, dass Eingriffselemente 34 und 34 miteinander in Eingriff gebracht werden. Neben der Möglichkeit der Faltung kann dies auch dadurch bewerkstelligt werden, dass der Behälter 10 beziehungsweise der Behältermantel 12 ein- oder mehrfach um eine Längsachse, bevorzugt um die Längsachse, die zwischen den Befestigungselementen 22 verläuft, gewickelt wird und nach der Wicklung Eingriffselemente 32 und 24 miteinander in Eingriff gebracht werden. Im Falle einer Befestigung an einer Stange eines Kinderwagens kann die Stange des Kinderwagens zusätzlich mit eingewickelt werden. Ferner ist es ebenso möglich, dass die Verkleinerung der Umfangsrichtung durch Vorsehen einer Falte in Längsrichtung und eines entsprechenden Elements, z.B. einem Reißverschluss, der ebenfalls in einer Längsrichtung schließbar ist, bereitgestellt wird. Zusätzlich zu den beschriebenen Elementen kann ein Kragenabschnitt 30 vorgesehen sein, der die Gegenstände vor dem Herausfallen schützen kann.

Figurenfolge 6 zeigt bevorzugte geometrische Ausführungsformen bzw. Varianten der vorliegenden Erfindung. Diese Figuren sind Draufsichten senkrecht zu einer Längsachse.

Hierbei ist insbesondere zu beachten, dass die Grundform des erfindungsgemäßen Behälters nicht notwendigerweise spiegel- oder gar rotationssymmetrisch ist. Allerdings ist der Behälter gemäß bevorzugter Ausführungsformen spiegel- und/oder rotationssymmetrisch. Dies kann einerseits optisch besonders ansprechend sein. Andererseits kann das Vorsehen einer Symmetrie aber auch Fertigungsschritte vereinfachen und daher zu einem einfachen und ökonomischen Fertigungsprozess beitragen.

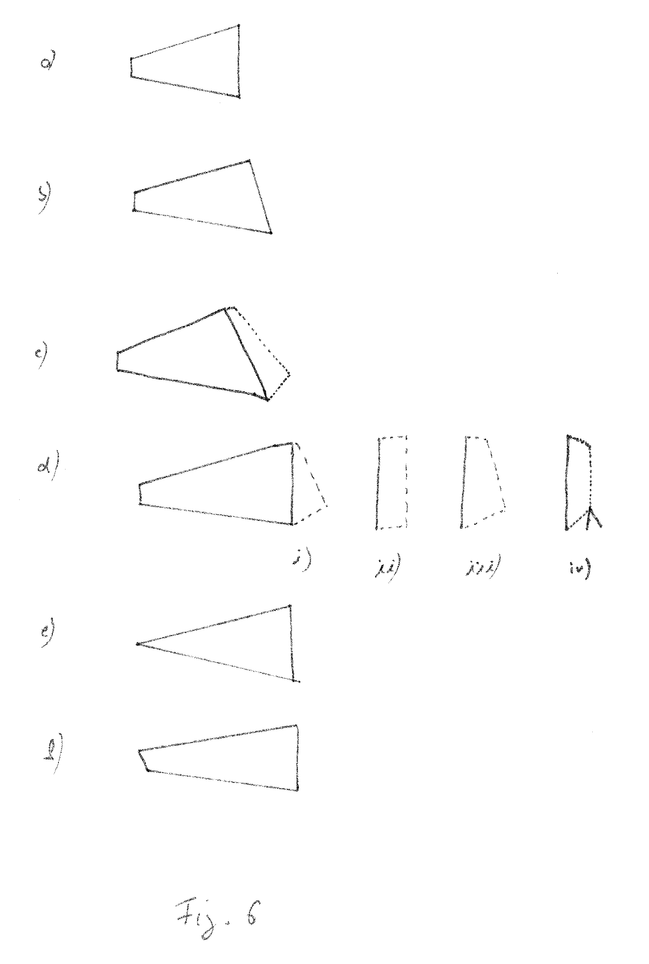

Fig. 6 a) zeigt eine Draufsicht in Form eines im Wesentlichen gleichschenkligen Trapezes, während in Fig. 6 b) ein Schnitt des Behälter bzw. Behältermantels, welcher zu der vorab beschrieben ersten Behälteröffnung 18 korrespondiert, angeschrägt ist. Figuren 6 c) und d) zeigen Draufsichten auf einen Behälter, der zusätzlich einen Kragenabschnitt aufweist. Dieser Kragenabschnitt ist in diesen Figuren gestrichelt gekennzeichnet. Es ist vorzugsweise ein- bzw. umklappbar. Wie Figuren 6 c), 6 d) i), iii), und iv) zu entnehmen ist, ist der Kragenabschnitt gemäß einer ersten bevorzugten Ausführungsform angeschrägt. Dies kann bedeuten, dass die Öffnung entlang des Kragenabschnitts einen kleineren Umfang aufweist als die erste Behälteröffnung. In Fig. 6 iv) sind zusätzlich beispielhafte Zugelemente dargestellt, mittels derer der Umfang eines Kragenabschnitts und/oder von dessen Öffnung verändert werden kann. Ein solches Zugelement kann auch an der ersten Behälteröffnung oder anderen Kragenabschnittformen vorgesehen sein. Ferner ist es gemäß Fig. 6 d) ii) ebenso möglich, dass sich der Kragenabschnitt parallel zur Behälteröffnung erstreckt, und vorzugsweise eine im Wesentlichen rechteckige Grundform einnimmt. In einem solchen Fall weist der Kragenabschnitt im Wesentlichen den gleichen Öffnungsumfang wie die erste Behälteröffnung auf. Gemäß weiterer Ausführungsformen, die in Fig. 6 e) und 6 f) gezeigt sind, kann der Behälter aber in einer Draufsicht auch im Wesentlichen die Form eines spitzen Dreiecks aufweisen. Ebenso kann die zweite Behälteröffnung angeschrägt sein (siehe Fig. 6 f), wobei die Richtung der Anschrägung nicht auf das hier gezeigte Ausführungsbeispiel beschränkt sein soll. Die zweite Behälteröffnung kann auch die Grundform des Behälters in der dargestellten Ansicht nicht beeinflussen, bspw. indem sie in der Unterseite (gemäß Anwendungsposition und Darstellung in Fig. 6), bspw. im Wesentlichen schlitzförmig, vorgesehen ist.

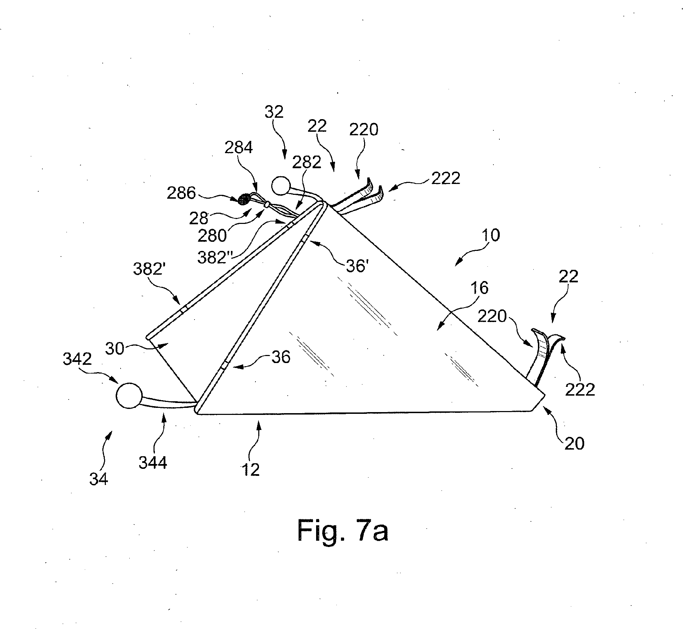

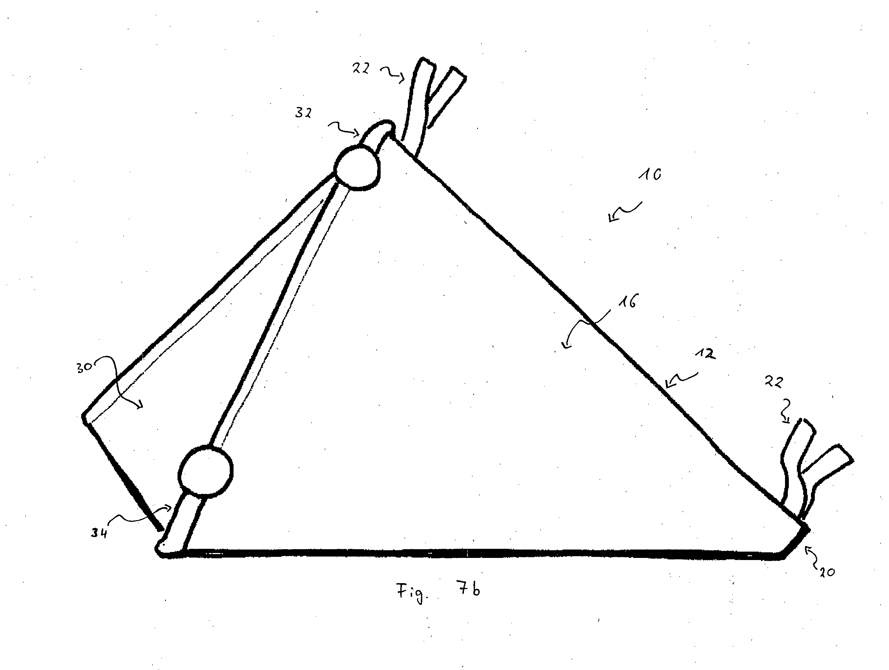

Fig. 7a zeigt ein weiteres Ausführungsbeispiel eines erfindungsgemäßen Behälters. Gleiche oder ähnliche Elemente wie in den vorab beschriebenen Ausführungsformen haben gleiche Bezugszeichen. Zusätzlich zu den Elementen, die vorab für die anderen Ausführungsfornen beschrieben wurden, weist das Ausführungsbeispiel Zusatzeingriffselemente 382' und 382" auf, die ausgelegt sind, mit Eingriffselementen 34 bzw. 32 in Eingriff zu treten. Anders als in dem in Fig. 1 dargestellten Ausführungsbeispiel sind diese Zusatzeingriffselemente 382', 382" an einer Begrenzung eines Kragenabschnitts 30 angebracht, wodurch die Öffnung des Kragenabschnitts 30 anpassbar ausgestaltet ist. Weiterhin sind in Fig. 7a Korrespondenzelemente 36 und 36' dargestellt, mit denen Eingriffselemente 34 bzw. 32 in Eingriff gebracht werden können, wenn keine Größenanpassung einer Öffnung erzielt werden soll. Der Eingriff zwischen Eingriffselementen 34 und 32 mit Korrespondenzelementen 36 bzw. 36' ist dafür ausgelegt, die Eingriffselemente 34 und 32 in diesem Zustand an einem definierten Ort zu fixieren und sie zum Beispiel davor zu schützen, unkontrolliert zu schwingen bzw. zu baumeln. Diese Fixierung ist beispielhaft in Fig. 7b dargestellt.

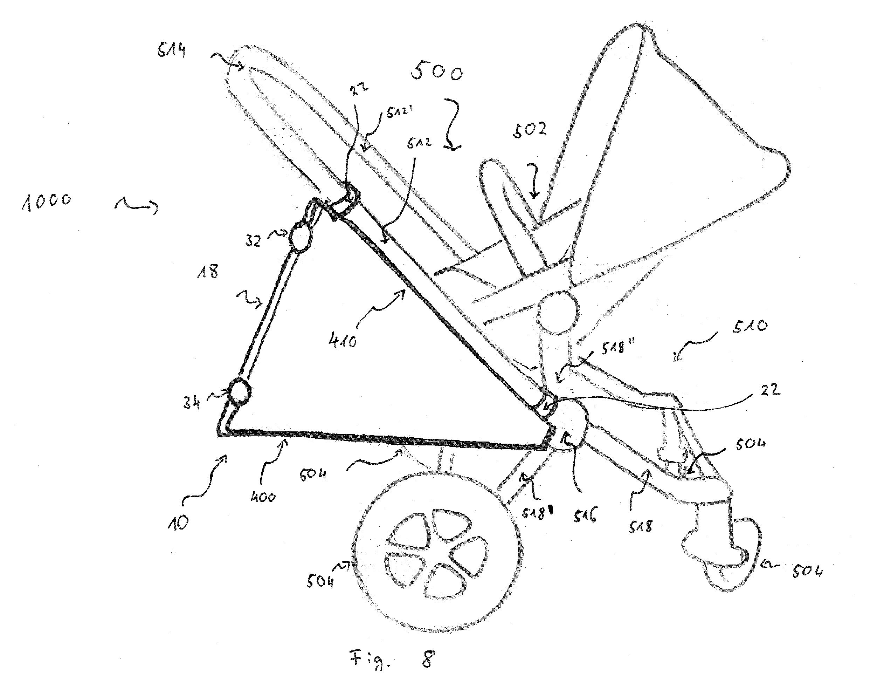

In Fig. 8 ist eine Kombination bzw. ein System 1000 gezeigt, das einen erfindungsgemäßen Behälter 10 und einen Kinderwagen 500 aufweist. Ohne diese explizit zu nennen und ohne, dass diese explizit durch Bezugszeichen hervorgehoben sind, ist dem Fachmann klar, dass Behälter 10 verschiedene vorab beschriebene Merkmale und/oder Elemente aufweisen kann. Kinderwagen 500 ist für den Transport von Babys und/oder Kleinkindern ausgelegt. Kinderwagen 500 weist einen Korb bzw. ein Transportteil 502 auf, in dem Babys und/oder Kleinkinder sitzen und/oder liegen können. Transportteil 502 kann auch als abnehmbare Tragetasche ausgestaltet sein. Weiterhin sind am Kinderwagen 500 Räder 504 vorgesehen. Das dargestellte Ausführungsbeispiel weist 4 Räder auf. Es ist aber ebenso möglich, dass ein Kinderwagen 500 mehr oder weniger Räder aufweist. Vorzugsweise weist Kinderwagen 500 aber 3 oder 4 Räder auf. Diese sind über ein Verbindungselement 510, zum Beispiel einen Rahmen, mit Transportteil 502 verbunden. Verbindungselement bzw. Rahmen 510 weist verschiedene Stangenelemente auf, insbesondere auch Stangen 512 und 512', die in Schiebegriffabschnitt 514 münden. Stangen 512 bzw. 512' bilden hier mit der Waagerechten einen Winkel von etwa 45°. In anderen Ausführungsformen kann aber auch ein anderer Winkel vorgesehen sein. Ferner endet eine Stange 512 in Gelenk 516, welches Stange 512 mit weiteren Stangen 518, 518', 518" verbindet. Im gezeigten Ausführungsbeispiel ist Behälter 10 mittels Befestigungselementen 22 mit Stange 512 des Kinderwagens 500 verbunden. Dies kann zum Beispiel dadurch erreicht werden, dass Befestigungselemente 22 Klettverschlusselemente aufweisen, die dazu ausgelegt sind, miteinander in Eingriff zu sein. Andere Befestigungsmöglichkeiten sind - wie vorab beschrieben - ebenso möglich. Eine Straffung bzw. Dehnung in eine Längsrichtung des Behälters 10 kann verschiedenartig realisiert werden. So kann Behälter 10 eine Verstärkungsstange 26 aufweisen. Ebenso ist es möglich, dass Behälter 10 durch geeignetes Platzieren der Befestigungselemente 22 die gewünschte Dehnung bzw. Straffung aufweist. Hierfür können Befestigungselemente 22 in einem geeigneten Abstand voneinander an Stange 22 platziert werden. Ebenso ist dem Fachmann klar, dass Befestigungselemente 22 nicht zwingend an derselben Stange des Kinderwagens platziert werden müssen. Ebenso könnte eines der Befestigungselemente 22 an Stange 512 und das andere der gezeigten Befestigungselemente 22 an einer weiteren Stange, zum Beispiel Stange 518 angebracht sein. Wie gezeigt ist Behälter 10 so angebracht, dass sich eine erste Behälteröffnung 18 auf der Seite befindet, auf der am Kinderwagen 500 der Schiebegriff 514 angeordnet ist, also entgegen der Fahrtrichtung. Weiterhin ist Behälter 10 derart angeordnet, dass er einen Winkelbereich überdeckt, der im Wesentlichen gleich ist zu dem Winkelbereich zwischen der Waagerechten und dem Winkel, der zwischen Stange 512 und der Waagerechten eingeschlossen ist. In anderen Worten ist eine obere Winkelbegrenzung 410 von Behälter 10 im Wesentlichen zu Stange 512 parallel und eine untere Winkelbegrenzung 400 von Behälter 10 ist im Wesentlichen zur Waagerechten parallel. Weiterhin sind gemäß Fig. 8 Eingriffselemente 32 und 34 mit den ihnen zugeordneten Korrespondenzelementen in Eingriff, sodass Eingriffselemente 32, 34 in definierten "Ruhepositionen" angeordnet sind.

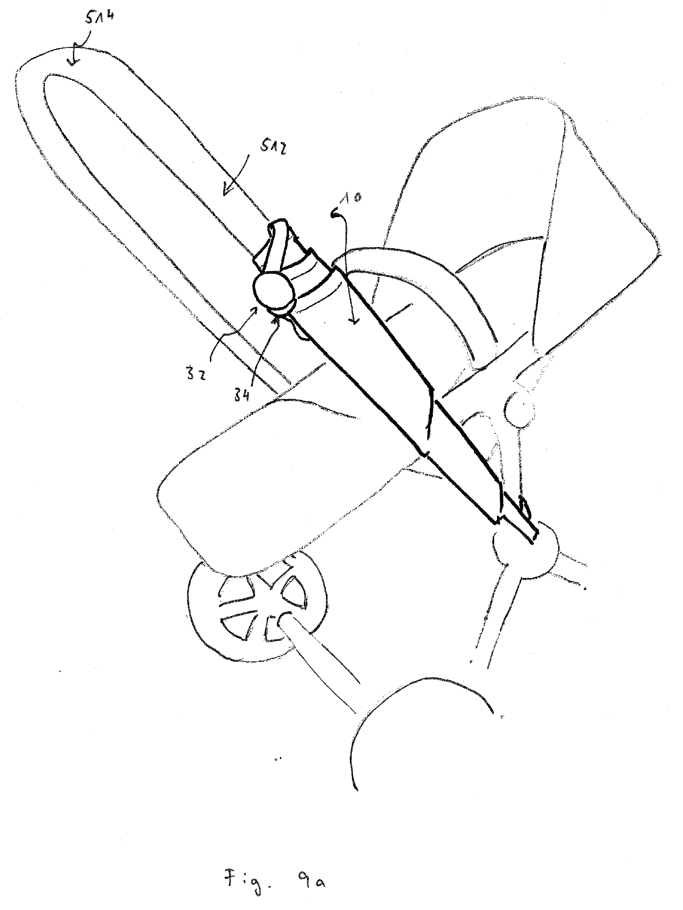

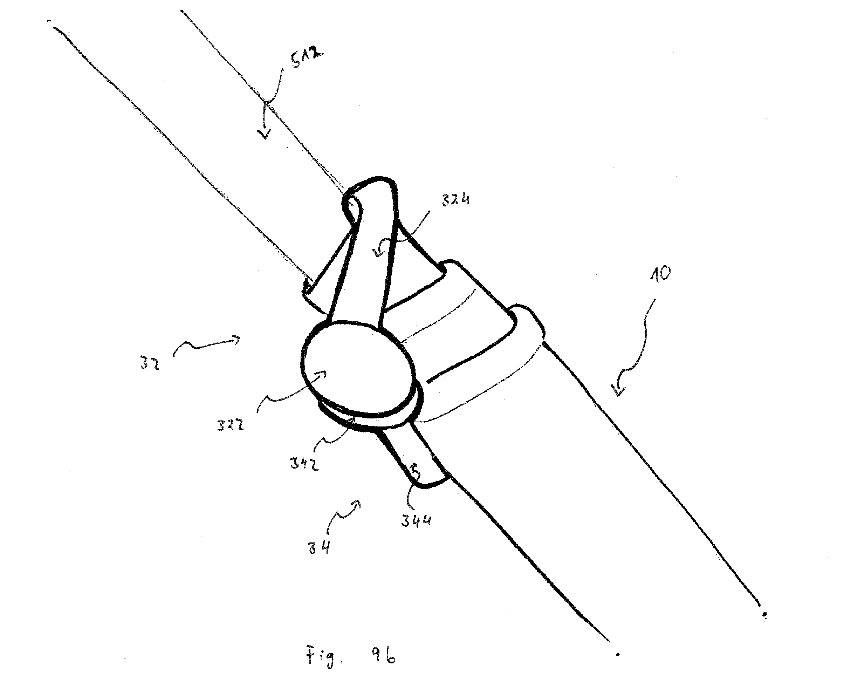

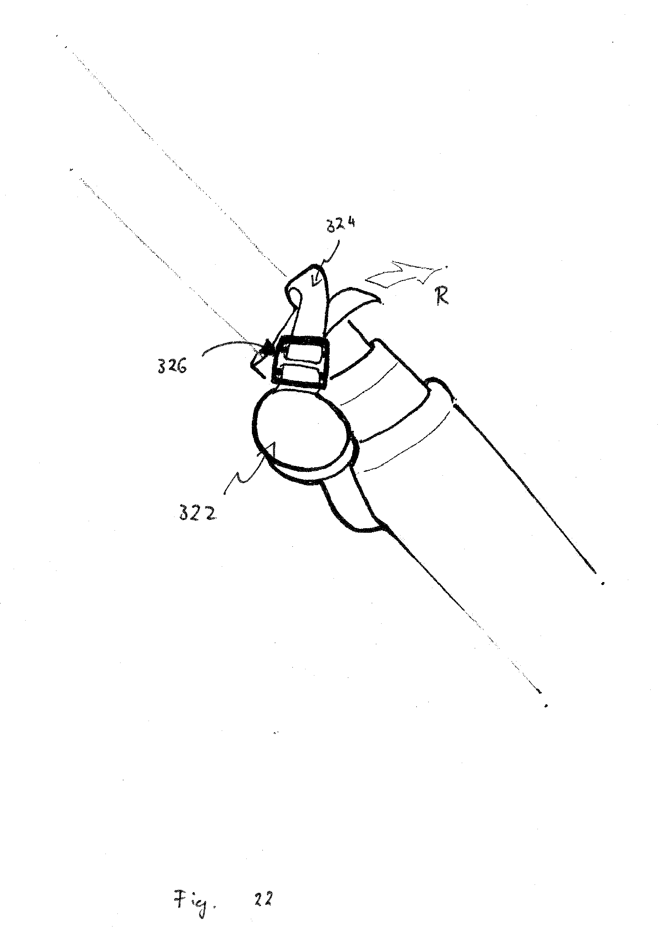

Fig. 9a hingegen zeigt eine Konfiguration, in der Behälter 10 um eine Längsachse gewickelt ist. In der dargestellten Konfiguration ist Kinderwagenstange 512 auch mit eingewickelt. Eingriffselemente 32 und 34 sind miteinander in Eingriff und halten die gewickelte Konfiguration. Diese Konfiguration kann alternativ und zusätzlich aber auch durch das Vorsehen anderer Elemente, zum Beispiel durch das Vorsehen von Bändern, bereitgestellt werden. Aus Fig. 9b, die eine vergrößerte Teilansicht der Fig. 9a zeigt, wird auch ersichtlich, dass der Eingriff zwischen den beiden Eingriffselementen 32, 34 durch Eingriff ihrer beiden Eingriffsbereiche 322 und 342 zu Stande kommt. Zusätzlich weisen Eingriffselemente 32, 34 Überbrückungsbereiche 324, 344 auf, die Eingriffsbereiche 322 bzw. 324 mit Behälter 10 verbinden. Diese können längenverstellbar sein und insbesondere Vorrichtungen zur Längenverstellung aufweisen. Gemäß Fig. 22 kann ein Element zur Längenverstellung 326 derart ausgestaltet sein, dass zumindest Teile des Überbrückungsbereichs 324 ein- oder mehrfach hindurch geführt werden kann, vorzugsweise in verschiedenen Orientierungen bzw. Ausrichtungen. Hierdurch kann eine Länge des Überbrückungsbereichs 324, der Eingriffsbereich 322 mit Behälter 10 verbindet, eingestellt und fixiert werden. Die Fixierung findet vorzugsweise durch Festziehen entlang einer Richtung R statt.

Ebenso oder alternativ können die Überbrückungsbereiche 324, 344 derart ausgebildet sein, dass sich ihre Eigenschaften, insbesondere hinsichtlich ihrer Elastizität und/oder einer von ihre bereitgestellten Rückstellkraft verändern lassen, zum Beispiel durch Verzwirbeln und/oder Wickeln.

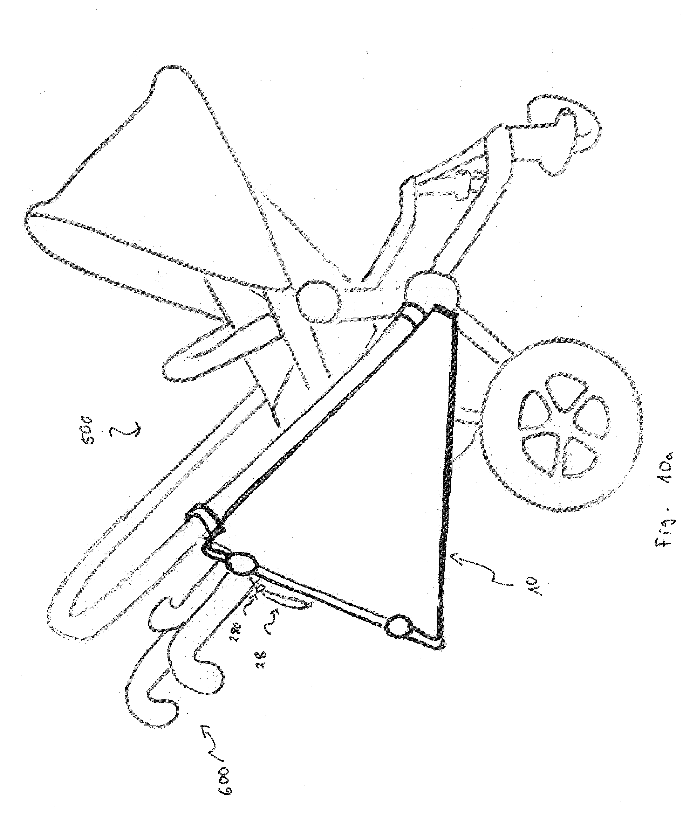

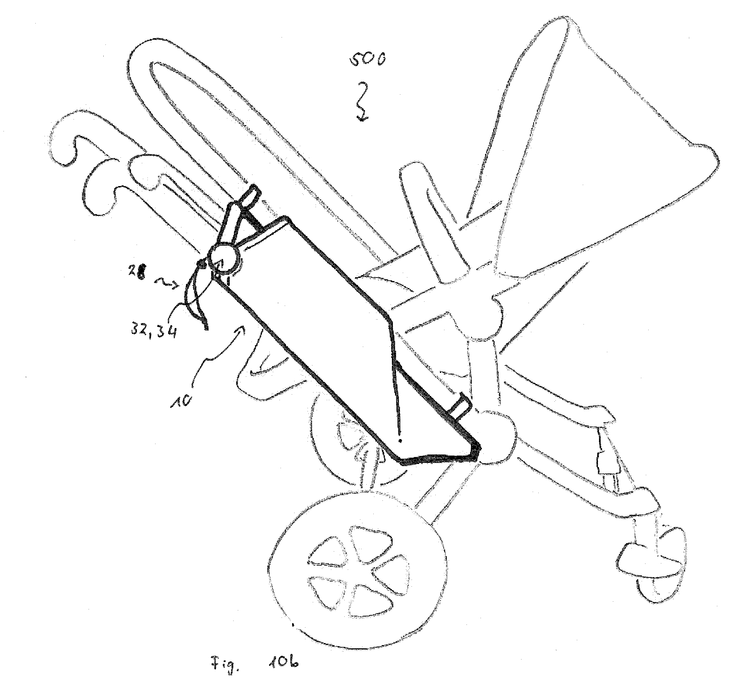

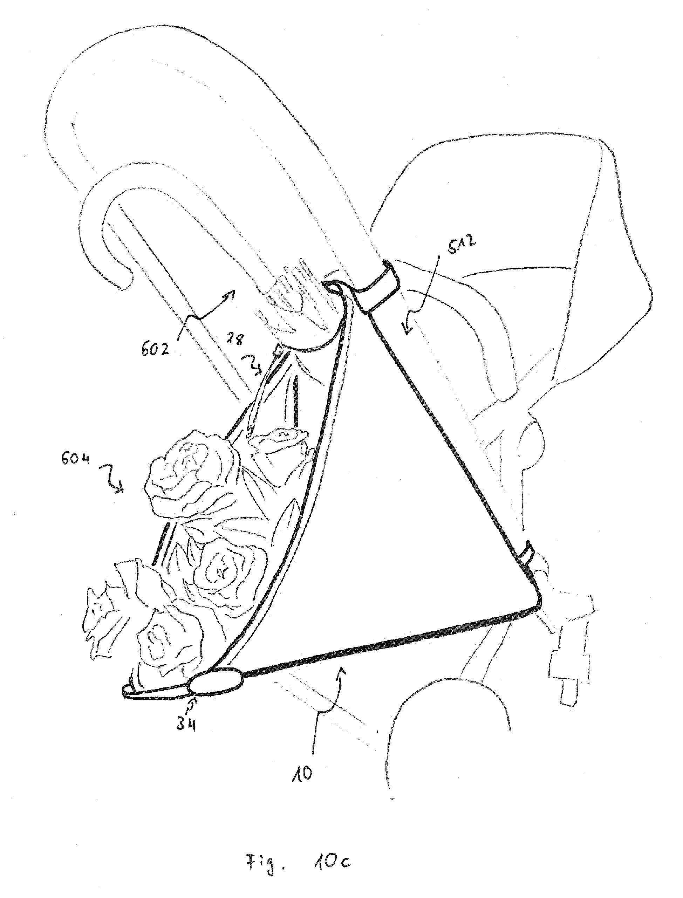

Figuren 10a und 10b zeigen im Wesentlichen einen Behälter 10 in Verbindung mit einem Kinderwagen mit den vorab beschriebenen Eigenschaften. Zusätzlich ist in Figuren 10a und 10b ein Schlaufenelement 28 wie vorab beschrieben zu sehen und weiter längliche Gegenstände, hier drei Hockeyschläger 600. Diese können gemäß einer bevorzugten Ausführungsform auch aus einer zweiten unteren Behälteröffnung hervorragen (hier nicht dargestellt). Behälter weist 10 Schlaufenelement 28 auf, wie vorab beschrieben. Mittels Verstellung von Einstellelement 280 können die Hockeyschläger 600 zusätzlich fixiert werden. Gemäß Fig. 10b kann Behälter 10, in welchem Hockeyschläger angeordnet sind, um eine Längsachse gewickelt werden und Eingriffselemente 32, 34 miteinander in Eingriff gebracht werden. Hierdurch wird eine praktikable Transportmöglichkeit am Kinderwagen 500 bereit gestellt. Gemäß Fig. 10c kann Behälter 10 auch dazu genutzt werden, unterschiedliche und verschiedenartige Gegenstände zu transportieren. So können zum Beispiel gleichzeitig ein Schirm 602 und Rosen 604 transportiert werden. In dem in Fig. 10c gezeigten Konfiguration des Ausführungsbeispiels sind Eingriffselemente 34 (32 nicht explizit gezeigt) nicht miteinander in Eingriff, sondern befinden sich mit ihren Korrespondenzelementen im Eingriff. Sie sind daher in einem "Ruhezustand". Der Behälter 10 ist auch nicht um seine eigene Achse gewickelt, wodurch er ein relativ großes Volumen beinhaltet. Schirm 602 ist in einem "oberen" Bereich des Behälterinneren untergebracht, d.h. in einem oberen Winkelbereich, d.h. in einem Bereich nahe zu bzw. im Wesentlichen parallel zur Kinderwagenstange 512. Er ist in diesem Bereich durch Schlaufen- bzw. Fixierelement 28 fixiert. Rosen bzw. allgemeiner Blumen bzw. empfindliche Gegenstände 604 hingegen sind in einem unteren Bereich, d.h. in einem unteren Winkelbereich der Behälters 10 angeordnet.

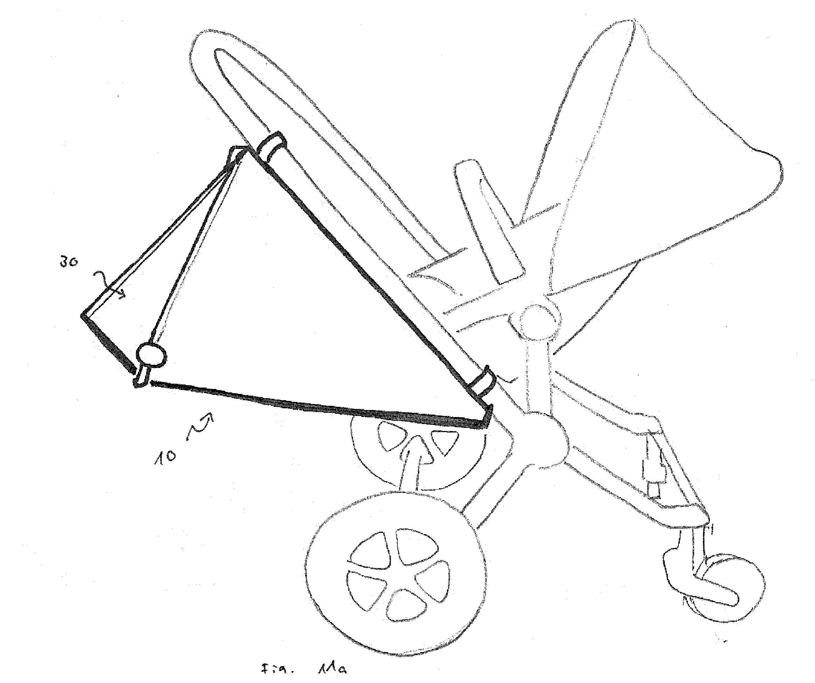

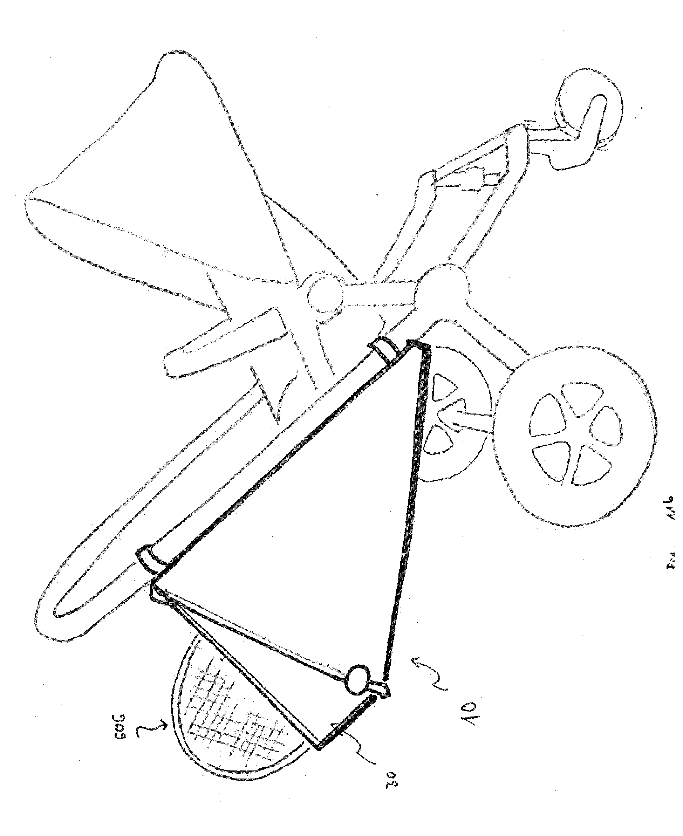

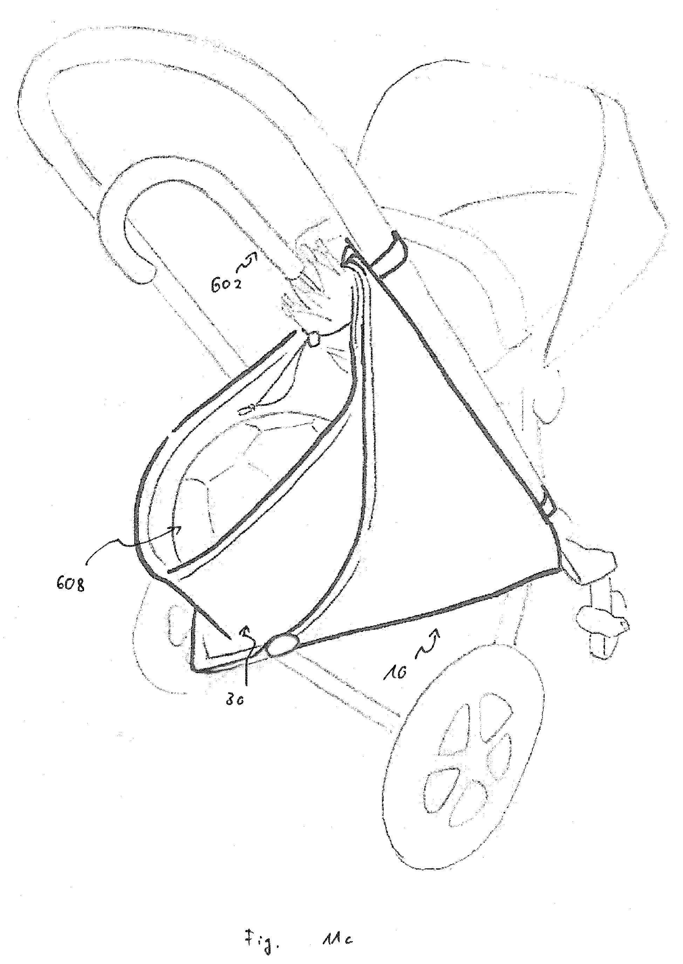

Das in Fig. 11a gezeigte Ausführungsbeispiel weist im Wesentlichen die Merkmale des in Fig. 8 gezeigten Ausführungsbeispiels auf (hinsichtlich dieser Merkmale wird auf die Diskussion hinsichtlich Fig. 8 verwiesen). Zusätzlich weist das in Fig. 11a dargestellte Ausführungsbeispiel Kragenabschnitt 30 auf, der wie vorab beschrieben ausgestaltet sein kann. Durch das Vorsehen eines solchen Kragenabschnitts 30 können gemäß Fig. 11b zum Beispiel unhandliche und/oder sperrige Gegenstände, zum Beispiel Schläger für Ballrückschlagssportarten, vorzugsweise Badminton-, Squash- und/oder Tennisschläger 606 einfach und praktikabel transportiert und vor dem Herausfallen geschützt werden. Weiterhin ist es möglich, verschiedene und verschiedenartige Gegenstände besonders einfach, sicher und praktikabel zu transportieren, wie dies zum Beispiel in Fig. 11 c gezeigt, in der einerseits ein länglicher Gegenstand, nämlich ein Schirm 602 und andererseits ein rundlicher Gegenstand, nämlich ein Ball, vorzugsweise ein Fußball 608, in Behälter 10 aufgenommen gezeigt sind. Auch die vorstehend beschriebenen Ausführungsformen, bspw. gemäß Fig. 8 - 10 können bevorzugte Kragenabschnitte, wie eingangs beschrieben, aufweisen. Diese können jedoch ein- bzw. umgeklappt werden.

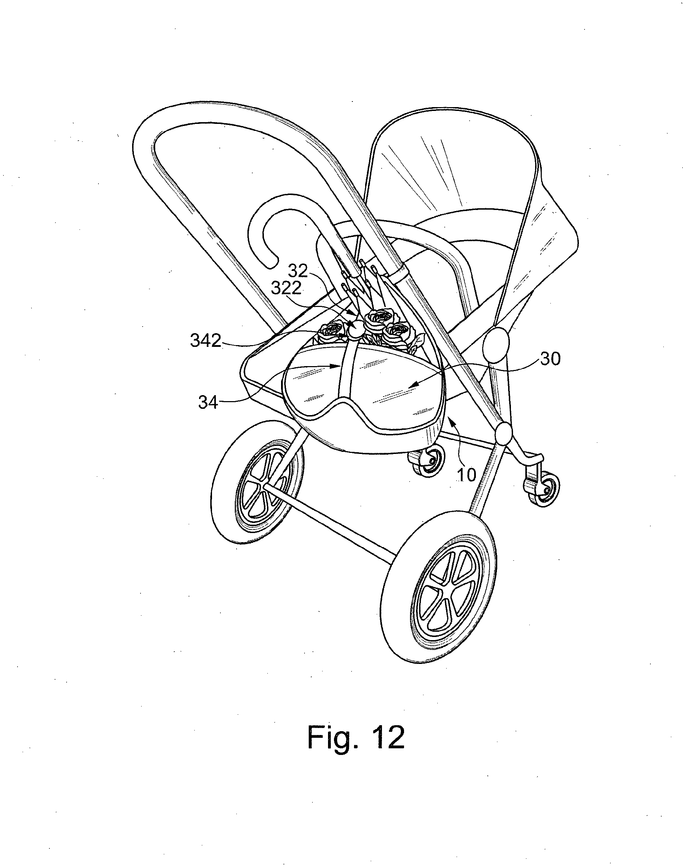

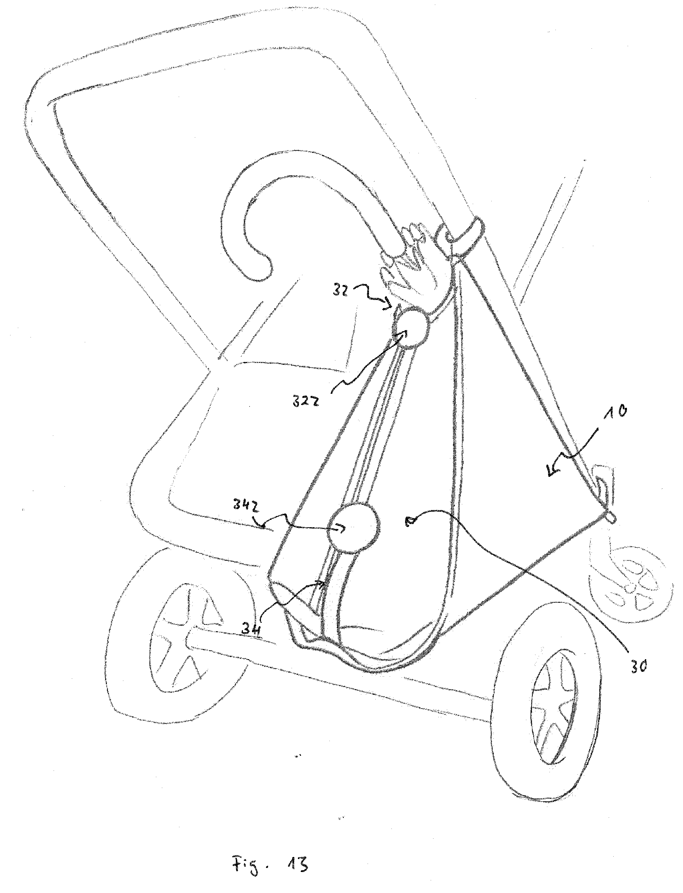

Ferner ist es gemäß Fig. 12 auch bevorzugt, dass Eingriffselemente 34 und 32 dazu ausgelegt sind, miteinander in Eingriff zu treten, ohne dass eine Faltung bzw. eine Wicklung entlang einer Längsachse des Behälters 10 vorliegt. In der gezeigten Konfiguration des gezeigten Ausführungsbeispiels sind Eingriffselemente 34 und 32 derart miteinander in Eingriff gebracht, dass sie die erste Behälteröffnung in ihrer Gestalt verändern. Die Eingriffselemente 34, 32 stehen über ihre Eingriffseinschnitte 342, 322 miteinander in Eingriff. Bevorzugt wird die Ausdehnung der Behälteröffnung bzw. einer Öffnung des Kragenabschnitts 30 in einer Richtung senkrecht zur Waagerechten, d.h. senkrecht zur Bodenfläche oder im Wesentlichen parallel zur Schwerkraft verändert und vorzugsweise verkleinert. Hierdurch wird die Winkelausdehnung von Behälter 10 verändert und zwar vorzugsweise derart, dass es für Gegenstände zusätzlich erschwert wird, über die erste Behälteröffnung bzw. über die Öffnung des Kragenabschnitts 30 aus Behälter 10 heraus zu fallen. Ebenso oder alternativ ist es gemäß Fig. 13 auch möglich, dass Eingriffselemente 32 und 34 mittels deren Eingriffsbereichen 322 bzw. 342 über Zusatzeingriffselemente (in Fig. 13 nicht gezeigt) mit einer Begrenzung von Kragenabschnitt 30 in Eingriff stehen und daher eine Öffnung des Behälters 10 bzw. des Kragenabschnitts 30 begrenzen. Hierdurch können im Behälter 10 befindliche Gegenstände vor Einwirkungen von außen, z.B. Nässe, Regen, Sonnenstrahlen und/oder Schmutz zusätzlich geschützt werden.

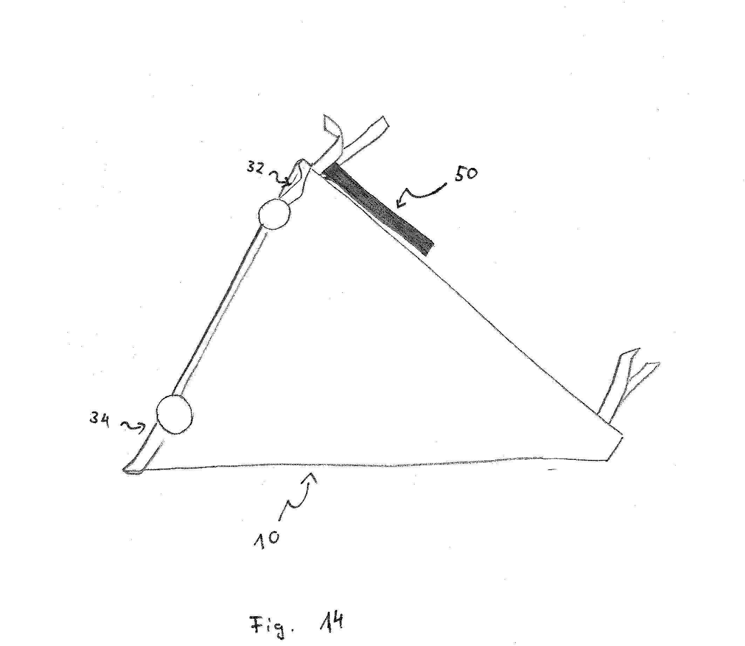

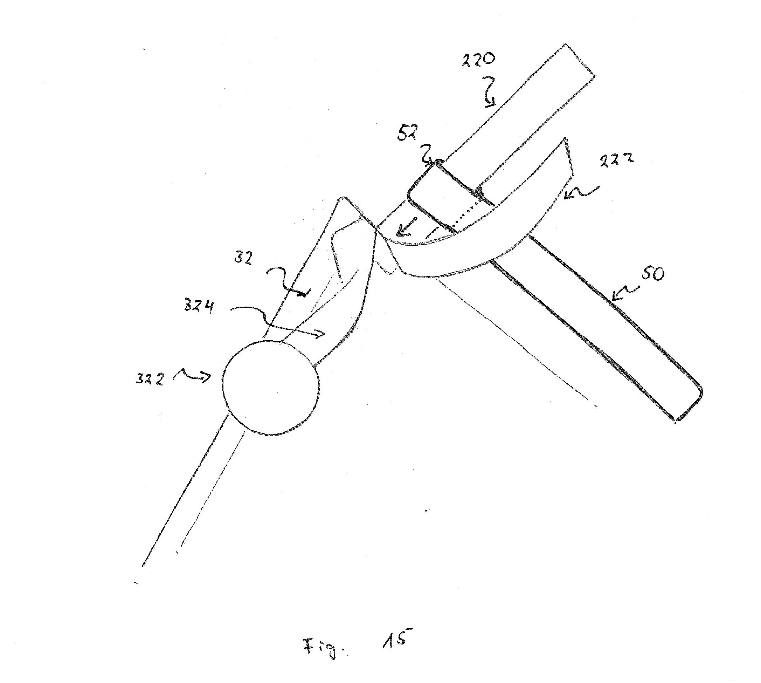

Gemäß Fig. 14 ist es bevorzugt, dass Behälter 10 ein zusätzliches Fixierelement 50 aufweist, das ausgelegt ist, mit mindestens einem der Eingriffselemente 32, 34 in Eingriff zu stehen. Gemäß Fig. 15 kann Fixierelement 50 derart ausgestaltet sein, dass es an einen Abschnitt 220 von Befestigungselement 22 angeordnet werden und mit diesem in Eingriff gebracht werden kann. Weiter ist es bevorzugt, dass Fixierelement 50 Klettverschlusshaken bzw. -widerhaken aufweist, um mit mindestens einem der Eingriffselemente 32, 34 in Eingriff gebracht werden zu können. Bevorzugt weist Fixierelement einen Endabschnitt 52 auf, der eine Schlaufe aufweist, durch die ein Abschnitt 220 von Befestigungselement hindurch geführt werden kann. Vorzugsweise beträgt eine Länge des Fixierelements 50 in etwa ein Drittel einer Länge des Behälters 10 in Längsrichtung und bevorzugt zwischen 10% und 50% einer Länge des Behälters 10 in Längsrichtung. Ferner kann Fixierelement 10 ein relativ flexibles Material aufweisen, beispielsweise gewebtes Material.

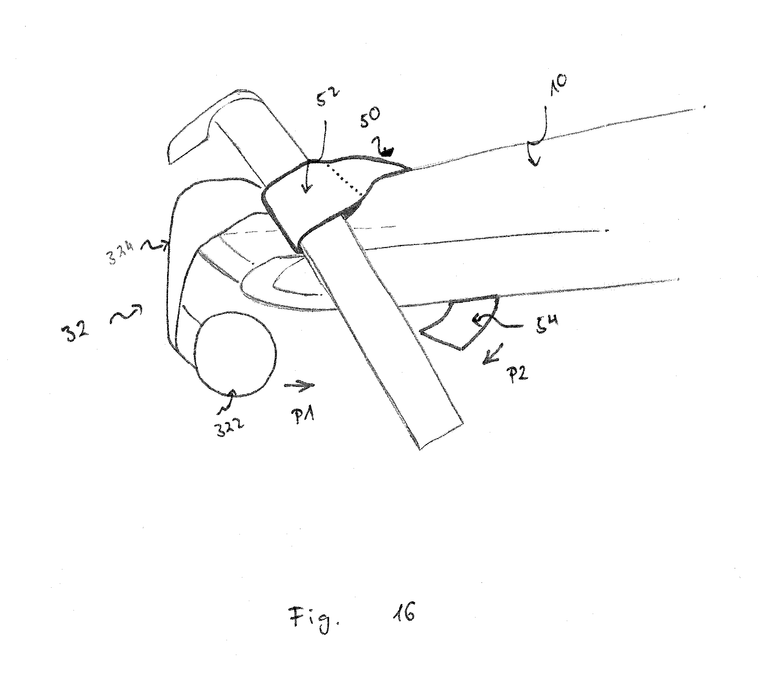

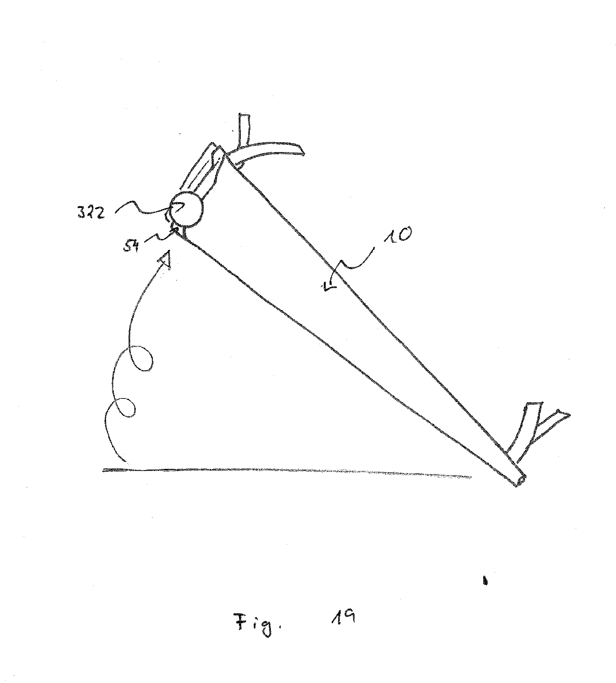

Gemäß Fig. 16 kann ein z.B. in Fig. 14 und 15 gezeigter Behälter 10 ein oder mehrfach um eine Längsachse gewickelt werden. Dies ist auch durch den gewundenen Pfeil in Fig. 19 dargestellt. Ferner ist es auch möglich, dass Behälter 10 in einer Richtung im Wesentlichen senkrecht zu einer Längsrichtung zusammengedrückt, geknautscht, geknittert bzw. "gekrumpelt" wird. Sowohl bei einer solchen Wicklung als auch bei einer Verringerung einer Ausdehnung durch Zusammenknautschen und Ähnlichen kann ein Endabschnitt 54 mit Eingriffsbereich 322 von Eingriffselement 32 in Eingriff gebracht werden. Dem Fachmann ist klar, dass dies analog auch für Eingriffsbereich 342 von Eingriffselement 34 realisiert werden kann. Das In-Eingriff-Bringen ist in Fig. 16 durch Pfeile P1 und P2 angedeutet.

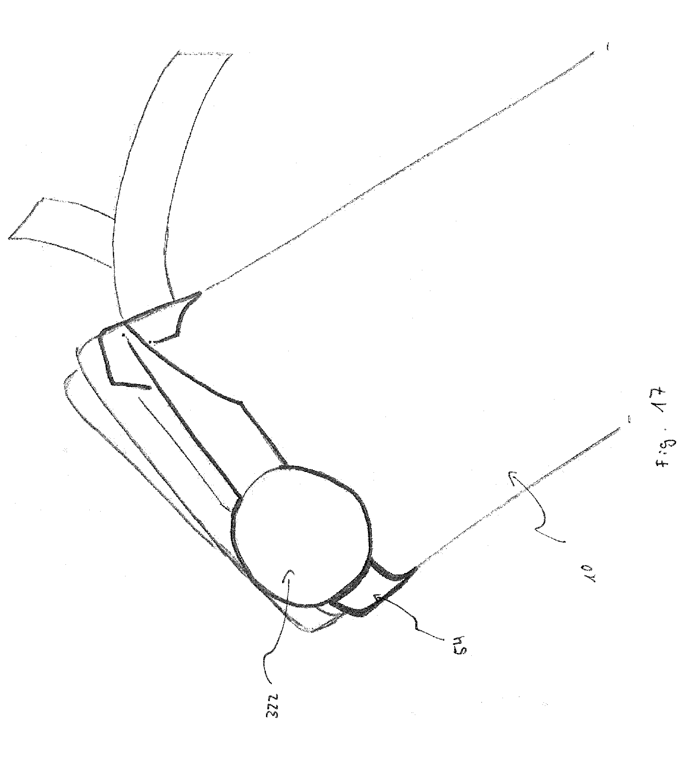

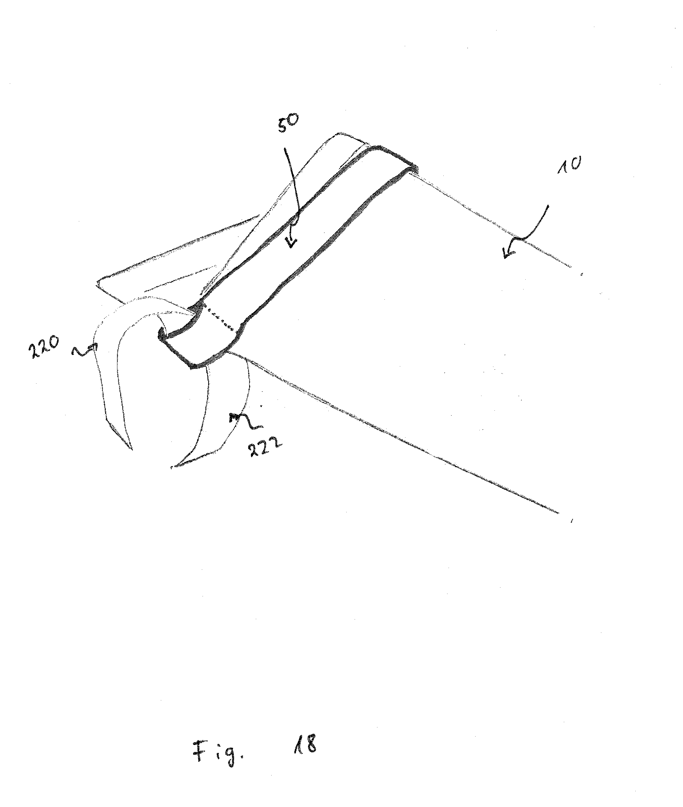

Fig. 17 zeigt eine erste Draufsicht auf einen Behälter 10, in dem ein Endabschnitt 54 von Fixierelement 50 mit einem Eingriffsbereich 322 von Eingriffselement 32 in Eingriff steht. Bevorzugt kann dies dadurch realisiert werden, dass Eingriffsbereich 322 Klettverschlussschlaufen oder -widerhaken aufweist und Endabschnitt 54 die dazu korrespondierenden Elemente, also Klettverschlusswiderhaken bzw. -schlaufen aufweist. Fig. 18 zeigt eine zweite Draufsicht auf einen Behälter 10 wie in Fig. 17 gezeigt, wobei diese Draufsicht derjenigen aus Fig. 17 im Wesentlichen entgegengesetzt ist.

Alternativ kann das Fixierelement auch in Form eines Schlaufenelementes 60 realisiert sein. Ein solches Schlaufenelement weist bevorzugt eine Schlaufe 66 auf, die besonders bevorzugt elastisch ist. Schlaufe 66 kann auch aus einem Band geformt sein und durch das Vorsehen eines Knoten 68 eine Schlaufe bilden. Weiter weist Schlaufenelement 60 vorzugsweise ein Schlaufeneinstellelement 62 auf, welches Schlaufenelement in zwei Unterschlaufen teilt und ferner ein Stoppelement 64, das ausgelegt ist, zu verhindern, dass Einstellelement 62 von Schlaufenelement 60 entfernt werden kann. Ein solches Schlaufenelement wird bevorzugt zwischen Abschnitten 220 und 222 von Befestigungselement eingeführt. Im Gebrauch kann es ferner von diesen Abschnitten und zusätzlich einer Stange 512 eines Kinderwagens begrenz sein. Ferner ist Schlaufenelement 60 bevorzugt dazu ausgelegt, eine Außenseite eines Behälters 10 in einem gewickelten und/oder kollabierten Zustand (zum Beispiel gefaltet, zusammengedrückt, geknautscht, geknittert oder gekrumpelt) zu umschließen und damit eine Ausdehnung eines Behälter 10 zu fixieren.

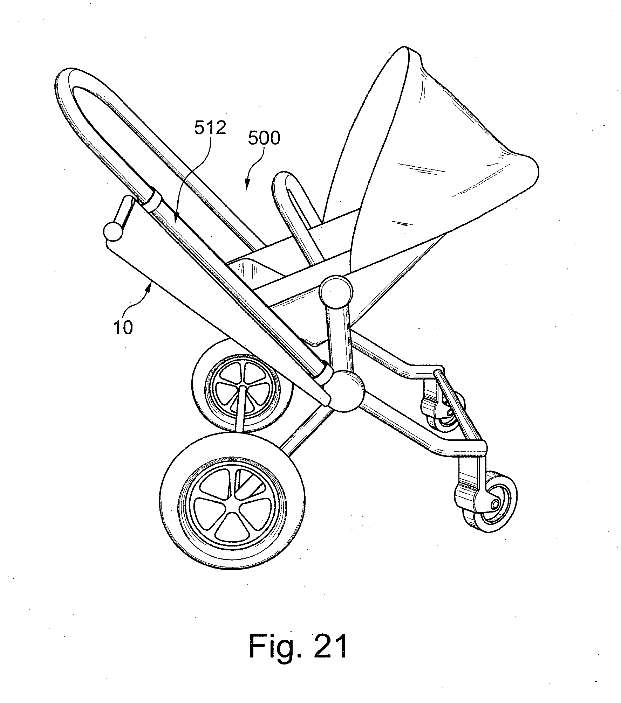

Gemäß Fig. 21 kann das Vorsehen derartiger Fixierelemente 50 und/oder Schlaufenelemente 60 dazu geeignet sein, einen Behälter 10, der eine Längsachse gewickelt oder anderweitig kollabiert ist, in diesem gewickelten Zustand zu halten bzw. zu fixieren, ohne, dass es notwendig ist, dass der Behälter zumindest teilweise um eine Stange 512 gewickelt wird.

Durch den erfindungsgemäßen Behälter und seine beschriebenen bevorzugten Ausführungsformen wird damit ein neuartiges System bereitgestellt, welches den Transport von länglichen Gegenständen, insbesondere an Kinderwagen, erheblich vereinfacht und diesen Transport praktikabler und sicherer macht. Insbesondere kann ein derartiger Behälter bzw. ein System mit einem derartigen Behälter und einem Kinderwagen Gegenstände transportieren, ohne dass diese beim Transport herumschwingen.

Obwohl die Erfindung vorstehend im Hinblick auf spezielle Ausführungsformen beschrieben wurde, ist dem Fachmann klar, dass er einzelne Elemente und Merkmale der verschiedenen beschriebenen Ausführungsformen weglassen oder miteinander kombinieren kann. Ferner ist dem Fachmann ebenso klar, dass die beschriebenen Ausführungsbeispiele lediglich dazu helfen sollen, die beschriebene Erfindung zu erläutern und zu veranschaulichen, nicht aber dazu geeignet sind, den Schutzbereich zu beschränken. Der Schutzbereich wird durch die beigefügten Ansprüche definiert, wobei dem Fachmann klar ist, dass äquivalente Ausführungsformen ebenso vom Schutzbereich gedeckt sind.

Wann immer in dieser Patentschrift Ausdrücke wie z.B. "etwa", "circa", "um", "im Wesentlichen", "im Allgemeinen", "zumindest", "mindestens" usw. verwendet werden, sollen die genauen oder exakten Ausdrücke, Merkmale, numerischen Werte oder Bereiche usw. ebenfalls mit abgedeckt sein. Der Ausdruck "etwa 3" soll also ebenfalls "genau 3" umfassen und ein Ausdruck wie z.B. "im Wesentlichen kegelstumpfförmig" soll auch "kegelstumpfförmig" umfassen. Der Ausdruck "beziehungsweise" bedeutet überdies "und/oder".

## Patentansprüche

1. Behälter,
der im Wesentlichen die Form einer Spitztüte aufweist,
mit einem Behältermantel mit einer Innenfläche und einer Außenfläche,
einer ersten Behälteröffnung an einem Ende des Behältermantels und
mit einem oder mehreren Befestigungselementen zum Anbringen des Behälters, insbesondere an einem Kinderwagen, die im Bereich der Außenfläche des Behälters angeordnet sind,
zum Aufnehmen und Transportieren von länglichen Gegenständen.

2. Behälter nach einem der vorhergehenden Ansprüche, wobei der Behälter und insbesondere die Befestigungselemente ausgelegt sind, den Behälter an eine Stange eines Kinderwagens anzubringen, die im gewöhnlichen Gebrauch zur Waagerechten einen Winkel zwischen 20° und 70°, bevorzugt zwischen 30° und 60°, besonders bevorzugt zwischen 35° und 55° und ganz besonders bevorzugt zwischen 40° und 50° bildet, wobei der Behälter ausgelegt ist an der Stange so angebracht zu werden, dass er in einer Draufsicht senkrecht zu einer Längsachse mit der Waagerechten einen Winkelbereich überdeckt, der ein Teilbereich ist von dem Winkelbereich zwischen -5° und dem Winkel zwischen der Waagerechten und der Kinderwagenstange, wobei das Winkelvorzeichen so definiert ist, dass der Winkel zwischen der Waagerechten und der Stange des Kinderwagens positiv ist, und vorzugsweise so angebracht zu werden, dass die erste Öffnung an einer Seite angebracht ist, auf der der Kinderwagen einen Schiebegriff aufweist.

3. Behälter nach einem der vorhergehenden Ansprüche mit einer zusätzlichen Verstärkungsstange, die, vorzugsweise an der Innenfläche des Behälters, so angeordnet ist, dass sie, wenn der Behälter an einer Stange des Kinderwagens angebracht ist, im Wesentlichen zu dieser Stange parallel ist und die sich zumindest über einen Großteil einer Längsrichtung des Behältermantels erstreckt.

4. Behälter nach einem der vorhergehenden Ansprüche und zusätzlich mit einer Schlaufe in der ersten Behälteröffnung, durch die längliche Gegenstände fixiert werden können.

5. Behälter nach Anspruch 4, wobei das Verhältnis aus einem Umfang der
Behälteröffnung und einem Umfang der Schlaufe zwischen 1 und 6, bevorzugt zwischen 1,5 und 5, besonders bevorzugt zwischen 2 und 4 und ganz besonders
bevorzugt zwischen 2,5 und 3,5 liegt.

6. Behälter nach einem der vorhergehenden Ansprüche, der zusätzlich eine zweite Behälteröffnung an einem Ende des Behältermantels aufweist, das dem Ende der ersten Behälteröffnung entgegengesetzt ist.

7. Behälter nach Anspruch 6, wobei die zweite Behälteröffnung ausgelegt ist, um Flüssigkeiten abzuleiten und/oder um lange Gegenstände hierdurch zu führen.

8. Behälter nach einem der vorhergehenden Ansprüche, der zusätzlich einen ein- und ausklappbaren Kragenabschnitt aufweist, der in einem eingeklappten Zustand umfangsseitig von dem Behältermantel umgeben ist und der sich in einem ausgeklappten Zustand mit zunehmendem Abstand vom Behältermantel verjüngt und insbesondere nahe des Mantelabschnittes einen größeren Umfang aufweist als weiter davon entfernt.

9. Behälter nach einem der vorhergehenden Ansprüche, wobei der Behälter ausgelegt ist, entlang einer Längsachse gefaltet und/oder gewickelt zu sein und der Behälter mittels einem oder mehreren Halteelementen im gefalteten bzw. gewickelten Zustand gehalten werden kann.

10. Behälter nach Anspruch 9, wobei die Halteelemente zwei Eingriffselemente aufweisen, die an entgegen gesetzten Enden der ersten Behälteröffnung montiert sind und die ausgelegt sind, miteinander in Eingriff zu sein, wenn der Behälter entlang einer Längsachse gefaltet und/oder gewickelt ist.

11. Behälter nach einem der vorhergehenden Ansprüche, wobei ein Innenvolumen des Behälters anpassbar ist.

12. Behälter nach einem der vorhergehenden Ansprüche, wobei der Behältermantel eine Länge zwischen 0,25 m und 1 m, bevorzugt zwischen 0,3 und 0,7 m, besonders bevorzugt zwischen 0,3 m und 0,6 m und ganz besonders bevorzugt zwischen 0,35 m und 0,55 m aufweist.

13. Behälter nach einem der vorhergehenden Ansprüche, wobei die erste Behälteröffnung einen Umfang zwischen 0,5 m und 1,3 m, bevorzugt zwischen 0,6 und 1,2 m, besonders bevorzugt zwischen 0,7 m und 1,1 m und ganz besonders bevorzugt zwischen 0,8 m und 1,0 m aufweist.

14. Behälter nach einem der vorhergehenden Ansprüche, wobei der Behälter ausgelegt ist, lange Gegenstände wie Hockeyschläger und/oder runde und sperrige Gegenstände wie Fußbälle aufzunehmen und zu transportieren.

15. System mit einem Kinderwagen und einem Behälter nach einem der vorhergehenden Ansprüche.
